# EUROPEAN PATENT SPECIFICATION

(11) **EP 3 378 717 B1**
(45) Date of publication and mention of the grant of the patent: **29.01.2020**
(21) Application number: 17820251.1
(22) Date of filing: 29.06.2017
(51) Int. Cl.: B60T 8/17, B60T 8/26

(54) **SADDLE-TYPE VEHICLE**
SATTELFAHRZEUG
VÉHICULE DU TYPE À SELLE

(30) Priority: 29.06.2016 JP 2016129263; 22.07.2016 JP 2016144421; 22.07.2016 JP 2016144440; 31.10.2016 JP 2016213121
(43) Date of publication of application: 26.09.2018
(73) Proprietor: Yamaha Hatsudoki Kabushiki Kaisha, Iwata-shi, Shizuoka 438-8501 (JP); Advics Co., Ltd., Kariya-shi, Aichi 448-8688 (JP)
(72) Inventor: KASAI, Satoshi, Iwata-shi Shizuoka 438-8501 (JP); MIZUTANI, Takaaki, Iwata-shi Shizuoka 438-8501 (JP); FUKUDA, Tadashi, Iwata-shi Shizuoka 438-8501 (JP); SEKI, Yoshimichi, Iwata-shi Shizuoka 438-8501 (JP); HIGUCHI, Shoma, Iwata-shi Shizuoka 438-8501 (JP); TERASAKA, Masato, Kariya-shi Aichi 448-8688 (JP); USHIROZAKO, Shinji, Kariya-shi Aichi 448-8688 (JP)
(74) Representative: Stöckeler, Ferdinand
(86) International application number: PCT/JP2017/023849
(87) International publication number: WO 2018/003897

(56) References cited:
- EP-A1- 1 826 443
- EP-A1- 2 977 281
- EP-A2- 1 566 540
- EP-A2- 2 305 525
- WO-A1-2014/147976
- JP-A- 2012 166 670
- JP-A- 2014 144 656
- JP-A- 2015 182 685
- JP-A- 2015 182 685
- US-A1- 2007 075 582

## Description

### TECHNICAL FIELD

The present invention relates to a straddled vehicle including a brake servo device.

### BACKGROUND ART

Four-wheel vehicles such as automobiles or trucks have large vehicle weights. As such, when a driver attempts to keep, with his operation power, a four-wheel vehicle such as an automobile or truck halted on a slope or the like, a large braking force is needed. To provide a large braking force, a brake servo device is provided to boost the hydraulic pressure over the operation power by the driver. For example, JP 2012-116278 A (Patent Document 1, listed below) discloses an electric servo device that uses an electric motor that is actuated depending on the operation amount of the brake pedal to generate a boosted brake hydraulic pressure in the master cylinder. When the vehicle is stationary on a slope (uphill slope) and the ignition switch is off, pressing on the brake pedal starts the brake system, initiating the brake control by the electric servo device. A target hydraulic pressure is calculated depending on the amount by which the driver presses on the brake pedal. The electric motor is controlled to propel the piston to produce this target hydraulic pressure, thereby generating a hydraulic pressure in the master cylinder (see JP 2012-116278 A, paragraph 0049, FIG. 5, for example).

Recently, electrically driven brake servo devices similar to those used in automobiles or trucks have been proposed for straddled vehicles such as motorcycles (for example, JP 2000-335399 A (Patent Document 2, listed below)).

US 2007/075582 A1 teaches a braking device for a vehicle capable of switching properly between single braking for one of front or rear wheels and combined braking using a combined braking system according to driving conditions of the vehicle. Brake systems respectively for the front and rear wheels are provided so that brake caliper assemblies respectively for the front and rear wheels can be operated independently of each other. When a rear wheel slip ratio exceeds a threshold value under rear brake operation, a controller activates a hydraulic pressure modulator for the front wheel to start braking the front wheel.

### PRIOR ART DOCUMENTS

### PATENT DOCUMENTS

Patent Document 1: JP 2012-116278 A
Patent Document 2: JP 2000-335399 A

### SUMMARY OF THE INVENTION

### PROBLEMS TO BE SOLVED BY THE INVENTION

Unlike an automobile or truck, a straddled vehicle such as a motorcycle can be moved as the rider pushes the vehicle along. In a straddled vehicle, unlike in an automobile or truck, brake operations may be repeated while the ignition switch is off. Accordingly, in the motorcycle having the servo device of Patent Document 2, the capacity of the battery needs to be large enough to accommodate a large number of actuations of the servo device while the engine is not working. A straddled vehicle, unlike an automobile or truck, has a small vehicle body, and thus an increase in the battery capacity means an increased size of the vehicle.

An object of the present invention is to provide a straddled vehicle including a brake servo device that reduces electric power consumption to reduce the necessity to increase the size of the straddled vehicle.

### MEANS FOR SOLVING THE PROBLEMS

The present inventors did research to find a brake servo device suitable for a straddled vehicle.

Typically, a straddled vehicle includes a front-wheel braking operation element and a rear-wheel braking operation element. The rider may operate the front-wheel braking operation element to generate a braking force for the front wheel. Similarly, the rider may operate the rear-wheel braking operation element to generate a braking force for the rear wheel. Thus, the straddled vehicle includes a plurality of braking operation elements, where these braking operation elements may be operated to generate a braking force for the front wheel and a braking force for the rear wheel just as the rider desires.

Further, since the weight of a straddled vehicle is relatively small, the rider may, while the vehicle is stationary and the main switch is off, hold the bar handle and move the vehicle. At this moment, the rider may operate the front-wheel braking operation element to generate a braking force for the front wheel or operate the rear-wheel braking operation element to generate a braking force for the rear wheel.

Further, during the research, the inventors found that the braking force required from the rider holding the bar handle to move or stop the straddled vehicle while the main switch of the vehicle is off is extremely different from the braking force required while the vehicle is travelling. The braking force required from the rider holding the bar handle to move and stop the straddled vehicle while the main switch is off is by far smaller than the braking force required while the vehicle is travelling. This is presumably because the straddled vehicle is relatively light-weight and the speed at which the rider holding the bar handle moves the straddled vehicle while the main switch is off is low.

In view of this, the present inventors did further research to find arrangements where the method of supplying a pressure to the wheel cylinder of the brake when the vehicle is in an off state where the main switch is off and the vehicle is stationary or where the main switch is off and the vehicle is being moved by the rider is different from the method of supplying a pressure to the wheel cylinder of the brake when the vehicle is in the other state, i.e. on state. They arrived at the following arrangements.

### (Arrangement 1)

A straddled vehicle according to Arrangement 1 of the present invention includes:
a vehicle body;
a front wheel and a rear wheel supported on the vehicle body;
a front-wheel brake provided on the front wheel and including a front-wheel wheel cylinder for generating a braking force for the front wheel;
a front-wheel braking operation element operable by a rider;
a front-wheel master cylinder actuatable by an operation of the front-wheel braking operation element;
a front-wheel brake fluid channel connecting the front-wheel master cylinder to the front-wheel wheel cylinder;
a rear-wheel brake provided on the rear wheel and including a rear-wheel wheel cylinder for generating a braking force for the rear wheel;
a rear-wheel braking operation element operable by the rider;
a rear-wheel master cylinder actuatable by an operation of the rear-wheel braking operation element;
a rear-wheel brake fluid channel connecting the rear-wheel master cylinder to the rear-wheel wheel cylinder;
a bar handle, at least one of the front-wheel braking operation element and the rear-wheel braking operation element being supported on the bar handle, the bar handle configured to be capable of changing a direction of the front wheel;
a control device configured to control the straddled vehicle; and
a main switch configured to start the control device.

The front-wheel brake fluid channel is independent from the rear-wheel brake fluid channel.

The straddled vehicle further includes: a front-wheel master-cylinder hydraulic pressure detection unit configured to detect a brake hydraulic pressure generated in the front-wheel master cylinder, or a rear-wheel master-cylinder hydraulic pressure detection unit configured to detect a brake hydraulic pressure generated in the rear-wheel master cylinder. The straddled vehicle further includes: a front-wheel brake servo device configured to boost a brake hydraulic pressure in the front-wheel wheel cylinder based on the brake hydraulic pressure detected by the front-wheel master-cylinder hydraulic pressure detection unit, or a rear-wheel brake servo device configured to boost a brake hydraulic pressure in the rear-wheel wheel cylinder based on the brake hydraulic pressure detected by the rear-wheel master-cylinder hydraulic pressure detection unit.

When the rider has operated the front-wheel braking operation element while the vehicle is in an off state where the main switch is off and the straddled vehicle is stationary or where the main switch is off and the rider is moving the straddled vehicle, then, the front-wheel wheel cylinder is actuated by the brake hydraulic pressure generated by the front-wheel master cylinder without receiving a brake hydraulic pressure resulting from a boost by the front-wheel brake servo device, and, when the rider has operated the front-wheel braking operation element in at least a portion of a period for an on state other than the off state, then, the front-wheel wheel cylinder is actuated by the brake hydraulic pressure resulting from the boost by the front-wheel brake servo device.

When the rider has operated the rear-wheel braking operation element while the vehicle is in the off state where the main switch is off and the straddled vehicle is stationary or where the main switch is off and the rider is moving the straddled vehicle, then, the rear-wheel wheel cylinder is actuated by the brake hydraulic pressure generated by the rear-wheel master cylinder without receiving a brake hydraulic pressure resulting from a boost by the rear-wheel brake servo device, and, when the rider has operated the rear-wheel braking operation element in at least a portion of the period for the on state other than the off state, then, the rear-wheel wheel cylinder is actuated by the brake hydraulic pressure resulting from the boost by the rear-wheel brake servo device.

That is, in Arrangement 1, the straddled vehicle includes a one master cylinder hydraulic pressure detection unit for detecting the brake hydraulic pressure generated by one of the front-wheel and rear-wheel master cylinders, and a brake servo device. The brake servo device may include at least one electric booster and a control unit for driving the electric booster based on signals from the one master cylinder hydraulic pressure detection unit. The brake servo device is capable of boosting the brake hydraulic pressure generated by the one master cylinder depending on this brake hydraulic pressure. One braKe fluid channel connected to the one master cylinder is independent from the other brake fluid channel.

The one wheel cylinder connected to the one brake fluid channel may be configured to be actuated by the brake hydraulic pressure generated by the one master cylinder when the one braking operation element for actuating the one master cylinder has been operated by an operation amount at least equal to or larger than a predetermined reference operation amount while at least the vehicle is stationary and the main switch is off.

The one wheel cylinder connected to the one brake fluid channel may be configured to be actuated by the brake hydraulic pressure resulting from a boost by the brake servo device while the vehicle is travelling i.e. in a vehicle travel state and when the one braking operation element has been operated by an operation amount at least equal to or larger than a predetermined reference operation amount.

In Arrangement 1, the method of supplying a pressure to the wheel cylinder of a brake when the vehicle is in an off state where the main switch is off and the vehicle is stationary or the vehicle is being moved by the rider is different from the method of supplying a pressure to the wheel cylinder of the brake when the vehicle is in the other state, i.e. on state. When the vehicle is in the off state, which requires less braking forces than that required during vehicle travel, the brake hydraulic pressure derived from the brake servo device is minimized. This provides a straddled vehicle including a brake servo device that reduces electric power consumption and reduces the necessity to increase the size of the straddled vehicle.

The control unit may basically cause the brake hydraulic pressure resulting from a boost by the electric booster to act on the one wheel cylinder by driving the electric booster while the vehicle is travelling and when the one braking operation element has been operated.

### (Arrangement 2)

Starting from Arrangement 1, the front-wheel brake servo device may include no accumulator and include a front-wheel electric motor configured to generate the brake hydraulic pressure in the front-wheel wheel cylinder. Or, starting from Arrangement 1, the rear-wheel brake servo device may include no accumulator and include a rear-wheel electric motor configured to generate the brake hydraulic pressure in the rear-wheel wheel cylinder.

### (Arrangement 3)

Starting from Arrangement 1 or 2, the front-wheel brake servo device may include a front-wheel electric valve. The front-wheel electric valve is provided on the front-wheel brake fluid channel for switching the front-wheel brake fluid channel between a disconnected state and a communicated state. The front-wheel electric valve causes the front-wheel brake fluid channel to be in the communicated state when the vehicle is in the off state. Or, starting from Arrangement 1 or 2, the rear-wheel brake servo device may include a rear-wheel electric valve. The rear-wheel electric valve is provided on the rear-wheel brake fluid channel for switching the rear-wheel brake fluid channel between a disconnected state and a communicated state. The rear-wheel electric valve causes the rear-wheel brake fluid channel to be in the communicated state when the vehicle is in the off state.

For example, one of the front-wheel brake and rear-wheel brake servo devices may include an electric valve provided on the one brake fluid channel and capable of changing the cross-sectional area of the one brake fluid channel and driven by the control unit. When one braking operation element for actuating the one master cylinder has been operated by an operation amount at least equal to or larger than a predetermined reference operation amount while at least the vehicle is stationary and the main switch is off, the electric valve may cause the one brake fluid channel to be in the communicated state such that the one wheel cylinder is actuated by the brake hydraulic pressure generated by the one master cylinder.

### (Arrangement 4)

Starting from one of Arrangements 1 to 3, the front-wheel brake servo device may include a front-wheel electric booster configured to boost the brake hydraulic pressure in the front-wheel wheel cylinder and a front-wheel booster control unit configured to drive the front-wheel electric booster based on a signal from the front-wheel master-cylinder hydraulic pressure detection unit. The front-wheel booster control unit may drive the front-wheel electric booster such that a brake hydraulic pressure resulting from a boost by the front-wheel electric booster is variable such that the brake hydraulic pressure in the front-wheel wheel cylinder is variable. Or, the rear-wheel brake servo device may include a rear-wheel electric booster configured to boost the brake hydraulic pressure in the rear-wheel wheel cylinder and a rear-wheel booster control unit configured to drive the rear-wheel electric booster based on a signal from the rear-wheel master-cylinder hydraulic pressure detection unit. The rear-wheel booster control unit may drive the rear-wheel electric booster such that a brake hydraulic pressure resulting from a boost by the rear-wheel electric booster is variable such that the brake hydraulic pressure in the rear-wheel wheel cylinder is variable.

### (Arrangement 5)

Starting from Arrangement 4, at least one of the front-wheel electric booster and the rear-wheel electric booster may be an electrically driven gear pump, an electrically driven trochoid pump, an electrically driven piston pump, or an electrically driven master cylinder. While the vehicle is travelling and when the one braking operation element has been operated by an operation amount at least equal to or larger than a predetermined reference operation amount, at least one of the front-wheel booster control unit and the rear-wheel booster control unit may drive the electric booster to cause the brake hydraulic pressure resulting from a boost by the electric booster to act on the one wheel cylinder.

### (Arrangement 6)

Starting from one of Arrangements 1 to 5, when the rider has operated the front-wheel braking operation element in at least a portion of the period for the on state, the front-wheel wheel cylinder may be configured to be actuated by the brake hydraulic pressure resulting from the boost by the front-wheel brake servo device while the front-wheel brake fluid channel is in the communicated state. Or, when the rider has operated the rear-wheel braking operation element in at least a portion of the period for the on state, the rear-wheel wheel cylinder may be configured to be actuated by the brake hydraulic pressure resulting from the boost by the rear-wheel brake servo device while the rear-wheel brake fluid channel is in the communicated state.

### (Arrangement 7)

Starting from one of Arrangements 1 to 5, when the rider has operated the front-wheel braking operation element in at least a portion of the period for the on state, the front-wheel wheel cylinder may be configured to be actuated by the brake hydraulic pressure resulting from the boost by the front-wheel brake servo device while the front-wheel brake fluid channel is in the disconnected state. Or, when the rider has operated the rear-wheel braking operation element in at least a portion of the period for the on state, the rear-wheel wheel cylinder may be configured to be actuated by the brake hydraulic pressure resulting from the boost by the rear-wheel brake servo device while the rear-wheel brake fluid channel is in the disconnected state.

### (Arrangement 8)

Starting from one of Arrangements 1 to 7, when the rider has operated the front-wheel braking operation element in at least a portion of the period for the on state, the front-wheel wheel cylinder may be configured to be actuated by the brake hydraulic pressure resulting from boosting, by a predetermined ratio, the brake hydraulic pressure generated by the front-wheel master cylinder. Or, when the rider has operated the rear-wheel braking operation element in at least a portion of the period for the on state, the rear-wheel wheel cylinder may be configured to be actuated by the brake hydraulic pressure resulting from boosting, by a predetermined ratio, the brake hydraulic pressure generated by the rear-wheel master cylinder.

For example, while the vehicle is travelling and when the one braking operation element has been operated by an operation amount at least equal to or larger than a predetermined reference operation amount, the control unit may cause the brake hydraulic pressure resulting from boosting, by a predetermined ratio, the brake hydraulic pressure generated by the one master cylinder to act on the one wheel cylinder.

### (Arrangement 9)

Starting from one of Arrangements 1 to 7, the straddled vehicle may include a travel condition detection unit configured to detect a vehicle condition relating to a travel of the straddled vehicle. In such implementations, when the rider has operated the front-wheel braking operation element in at least a portion of the period for the on state, the front-wheel wheel cylinder may be configured to be actuated by a brake hydraulic pressure resulting from boosting, by a ratio based on the vehicle condition detected by the travel condition detection unit, the brake hydraulic pressure generated by the front-wheel master cylinder. Or, when the rider has operated the rear-wheel braking operation element in at least a portion of the period for the on state, the rear-wheel wheel cylinder may be configured to be actuated by a brake hydraulic pressure resulting from boosting, by a ratio based on the vehicle condition detected by the travel condition detection unit, the brake hydraulic pressure generated by the rear-wheel master cylinder.

For example, the straddled vehicle may include a travel condition detection unit for capturing data relating to travel conditions of the vehicle. While the vehicle is travelling and the one braking operation element has been operated by an operation amount at least equal to or larger than a predetermined reference operation amount, the control unit may drive the electric booster based on signals from the travel condition detection unit and signals form the one master cylinder hydraulic pressure detection unit such that a brake hydraulic pressure resulting from boosting, by a ratio depending on the travel conditions of the vehicle, the brake hydraulic pressure generated by the one master cylinder acts on the one wheel cylinder.

### (Arrangement 10)

Starting from one of Arrangements 1 to 9, the front-wheel braking operation element may be a brake lever supported on the bar handle. For example, the one braking operation element may be supported on the bar handle.

### (Arrangement 11)

Starting from one of Arrangements 1 to 10, the rear-wheel braking operation element may be a brake pedal provided on the vehicle body.

### (Arrangement 12)

Starting from one of Arrangements 1 to 11, the front-wheel brake servo device or the rear-wheel brake servo device may be supported on the vehicle body. For example, the brake servo device may be supported on the vehicle body so as to be displaceable relative to the front wheel or the rear wheel.

### EFFECTS OF THE INVENTION

The present invention will provide a straddled vehicle including a brake servo device that reduces electric power consumption and reduces the necessity to increase the size of the straddled vehicle.

### BRIEF DESCRIPTION OF THE DRAWINGS

[FIG. 1] FIG. 1 is a schematic side view of a motorcycle.
[FIG. 2] FIG. 2 schematically shows the construction of a brake system of Embodiment 1.
[FIG. 3A] FIG. 3A is a functional block diagram of the brake servo device for the front wheel.
[FIG. 3B] FIG. 3B is a functional block diagram of the brake servo device for the rear wheel.
[FIG. 4] FIG. 4 is a flow chart of a procedure in which the brake servo devices are controlled.
[FIG. 5] FIG. 5 schematically shows the construction of a brake system of Embodiment 2.
[FIG. 6] FIG. 6 shows a variation of the brake system.
[FIG. 7] FIG. 7 illustrates a straddled vehicle according to an embodiment of the present invention.

### EMBODIMENTS FOR CARRYING OUT THE INVENTION

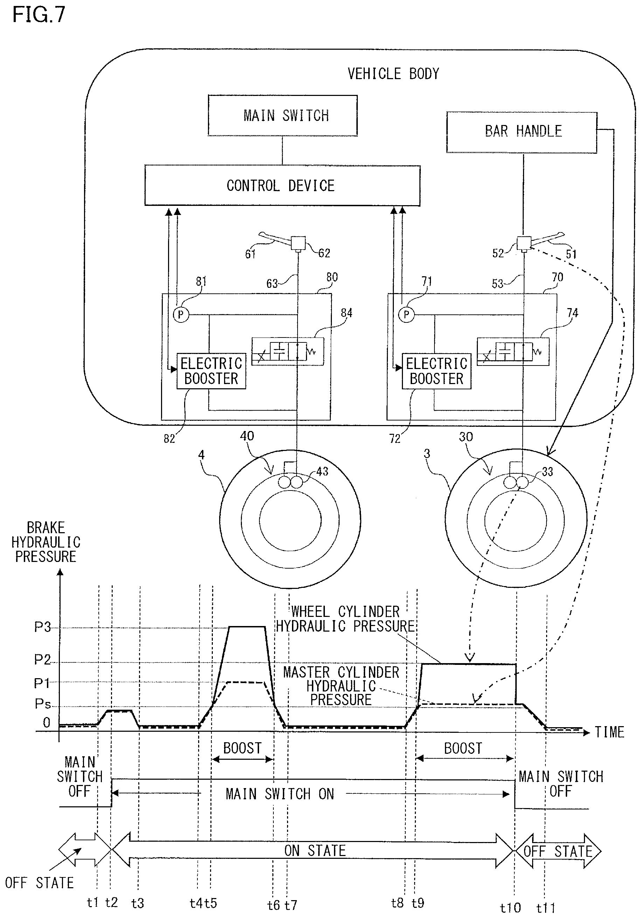

FIG. 7 illustrates a straddled vehicle according to an embodiment of the present invention. The straddled vehicle includes a vehicle body as well as a front wheel 3 and rear wheel 4 supported on the vehicle body. As shown in FIG. 7, the straddled vehicle includes: a front-wheel brake 30 that includes a front-wheel wheel cylinder 33 and generates a braking force for the front wheel 3; a front-wheel braking operation element 51 operable by the rider; a front-wheel master cylinder 52 that can be actuated as the front-wheel braking operation element 51 is operated; and a front-wheel brake fluid channel 53 connecting the front-wheel master cylinder 52 to the front-wheel wheel cylinder 33. The straddled vehicle further includes: a rear-wheel brake 40 that includes a rear-wheel wheel cylinder 43 and generates a braking force for the rear wheel 4; a rear-wheel braking operation element 61 operable by the rider; a rear-wheel master cylinder 62 that can be actuated as the rear-wheel braking operation element 61 is operated; and a rear-wheel brake fluid channel 63 connecting the rear-wheel master cylinder 62 to the rear-wheel wheel cylinder 44. The straddled vehicle further includes a bar handle, a control device for controlling the straddled vehicle, and a main switch for starting the control device. At least one of the braking operation element 51 and rear wheel braking operation element 61 is supported on the bar handle, which is configured to be capable of changing the direction of the front wheel 3. The front-wheel brake fluid channel 53 is independent from the rear-wheel brake fluid channel 63.

The straddled vehicle includes a front-wheel master-cylinder hydraulic pressure detection unit 71 for detecting a brake hydraulic pressure generated by the front-wheel master cylinder 52, and a front-wheel brake servo device 70 for boosting the brake hydraulic pressure in the front-wheel wheel cylinder 33 based on the brake hydraulic pressure detected by the front-wheel master-cylinder hydraulic pressure detection unit 71. When the rider has operated the front-wheel braking operation element 51 while the vehicle is in an off state, the front-wheel wheel cylinder 33 is actuated by the brake hydraulic pressure generated by the front-wheel master cylinder 52 without receiving a brake hydraulic pressure resulting from a boost by the brake servo device 70. When the rider has operated the front-wheel braking operation element 51 in at least a portion of the period for the other state, i.e. on state, the front-wheel wheel cylinder 33 is actuated by a brake hydraulic pressure resulting from a boost by the front-wheel brake servo device 70. Off state as used herein means a state where the main switch is off and the straddled vehicle is stationary, or where the main switch is off and the rider is moving the straddled vehicle.

The straddled vehicle includes a rear-wheel master-cylinder hydraulic pressure detection unit 81 for detecting a brake hydraulic pressure generated by the rear-wheel master cylinder 62, and a rear-wheel brake servo device 80 for boosting the brake hydraulic pressure in the rear-wheel wheel cylinder 43 based on the brake hydraulic pressure detected by the rear-wheel master-cylinder hydraulic pressure detection unit 81. When the rider has operated the rear-wheel braking operation element 61 while the vehicle is in an off state, the rear-wheel wheel cylinder 43 is actuated by the brake hydraulic pressure generated by the rear-wheel master cylinder 42 without receiving a brake hydraulic pressure resulting from a boost by the rear-wheel brake servo device 80. When the rider has operated the rear-wheel braking operation element 62 in at least a portion of the period for the other state, i.e. on state, the rear-wheel wheel cylinder 43 is actuated by a brake hydraulic pressure resulting from a boost by the rear-wheel brake servo device 80.

In the implementation shown in FIG. 7, when the vehicle is in the off state where the main switch is off and the straddled vehicle is either stationary or being moved by the power of the rider, the brake hydraulic pressure in each wheel cylinder is not boosted by the associated brake servo device. When the vehicle is in the off state, the brake hydraulic pressure in each master cylinder derived from the associated braking operation element for the rider acts on the associated wheel cylinder without being boosted. This will reduce the electric power consumption of the brake servo device. This will reduce the necessity to increase the size of the straddled vehicle.

In the example shown in FIG. 7, the main switch switches from off to on at time t2, and the main switch switches from on to off at time t10. Between time t1, which precedes time t2, and time t3, which follows time t2, the front-wheel braking operation element 51 is operated such that the brake hydraulic pressure in the front-wheel master cylinder 52 is lower than Ps. In the period where the main switch is on (t2 to t10), the front-wheel braking operation element 51 is operated such that the brake hydraulic pressure in the front-wheel master cylinder 52 falls within a range of 0 to P1 (P3>Ps). Between time t9, which precedes time t10, and time t11, which follows time t10, the front-wheel braking operation element 51 is operated such that the brake hydraulic pressure in the front-wheel master cylinder 52 falls within a range of 0 to P2 (P2>Ps). Regarding the period where the main switch is on (time t2 to t10), the brake hydraulic pressure in the front-wheel wheel cylinder 33 is boosted by the brake servo device 70 during periods where the brake hydraulic pressure in the front-wheel master cylinder 52 exceeds Ps, i.e. time t5 to time t6 and time t9 to time t10. During the other periods, i.e. time t1 to time t5; time t6 to time t9; and time t10 to time t11, the brake hydraulic pressure in the front-wheel wheel cylinder 33 is not boosted and is equal to the brake hydraulic pressure in the front-wheel master cylinder 52.

In the implementation shown in FIG. 7, when the vehicle is in the on state and when the front-wheel braking operation element 51 has been operated by an operation amount equal to or larger than a reference operation amount, a brake hydraulic pressure resulting from a boost by the brake servo device 70 acts on the front-wheel wheel cylinder 33. In FIG. 7, the reference operation amount is set to a level that causes the brake hydraulic pressure in the master cylinder to be at Ps.

The condition for boosting the brake hydraulic pressure in a wheel cylinder when the vehicle is in the on state is not limited to the operation amount of the braking operation element. For example, the condition for a boost may be a physical quantity indicative of other vehicle conditions than the operation amount of the braking operation element. For example, the brake hydraulic pressure in the wheel cylinder may be boosted when the vehicle is in the on state and the vehicle-body velocity exceeds a threshold. Alternatively, the wheel cylinder may be configured to be always actuated by a brake hydraulic pressure resulting from a boost by the brake servo device when the vehicle is in the on state. FIG. 7 shows an example of how the brake hydraulic pressure in front-wheel master cylinder 52 and that in the front-wheel wheel cylinder 33 change over time. The brake hydraulic pressure in the rear-wheel master cylinder 62 and that in the rear-wheel wheel cylinder 43 may change over time as shown in FIG. 7.

### (Embodiment 1)

Embodiment 1 of the present invention will now be described with reference to the drawings. A motorcycle will be described as an example of the straddled vehicle of Embodiment 1. However, the straddled vehicle of the present invention is not limited to a motorcycle, and any number of front and rear wheels may be provided. For example, a straddled vehicle with three or four wheels may be provided. In the following description, front/forward, rear(ward), left and right are directions with respect to the direction in which the motorcycle advances.

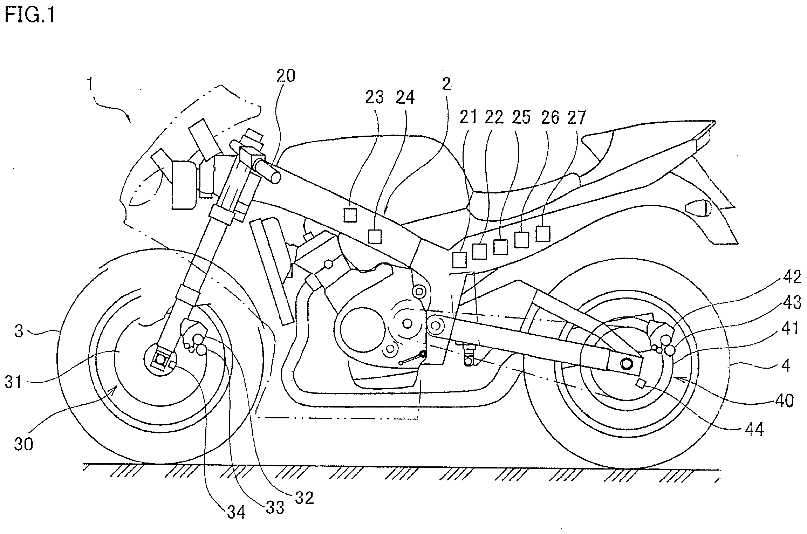

FIG. 1 is a schematic side view of the motorcycle. The motorcycle 1 includes a vehicle-body frame 2, a front wheel 3 and a rear wheel 4. The front wheel 3 is provided with a front-wheel brake 30 for generating a braking force for the front wheel 3. The rear wheel 4 is provided with a rear-wheel brake 40 for generating a braking force for the rear wheel 4. The front-wheel brake 30 is a disc brake generally composed of a front-wheel brake disc 31 and a front-wheel brake caliper 32. A front-wheel wheel cylinder 33 is provided on the front-wheel brake caliper 32. The front-wheel brake caliper 32 applies to the front-wheel 3 a braking force depending on the brake hydraulic pressure in the front-wheel wheel cylinder 33. The rear-wheel brake 40 is a disc brake generally composed of a rear-wheel brake disc 41 and a rear-wheel brake caliper 42. A rear-wheel wheel cylinder 43 is provided on the rear-wheel brake caliper 42. The rear-wheel brake caliper 42 applies to the rear wheel 4 a braking force depending on the brake hydraulic pressure in the rear-wheel wheel cylinder 43.

A handle 20 configured to be capable of changing the direction of the front wheel 3 is attached to the vehicle-body frame 2. An electronic control unit (ECU) 21 is provided on the vehicle-body frame 2 for controlling the operation of various parts of the motorcycle 1. Although not shown, a battery is provided on the vehicle-body frame 2 for supplying the ECU 21 with electric power. The front wheel 3 is provided with a front-wheel wheel velocity sensor 34, while the rear wheel 4 is provided with a rear-wheel wheel velocity sensor 44.

Further, an inertial measurement unit (IMU) 22 is provided on the vehicle-body frame 2. The IMU 22 measures the acceleration and angular velocity of the vehicle. Further, on the vehicle-body frame 2 may be provided a gyro sensor 23, a longitudinal acceleration sensor 24, a vehicle-body velocity detection unit 25, a pitch angle detection unit 26, a roll angle detection unit 27, and other elements. The vehicle-body velocity detection unit 25 calculates the vehicle-body velocity of the motorcycle 1 based on the front-wheel wheel velocity detected by the front-wheel wheel velocity sensor 34 and the rear-wheel wheel velocity detected by the rear-wheel wheel velocity sensor 44. The pitch angle detection unit 26 receives the pitch rate of the motorcycle 1 from the gyro sensor 23. The pitch angle detection unit 26 detects the pitch angle of the motorcycle 1 based on this and other input values. The roll angle detection unit 27 receives the roll rate of the motorcycle 1 from the gyro sensor 23. The roll angle detection unit 27 detects the roll angle of the motorcycle 1 based on this and other input values.

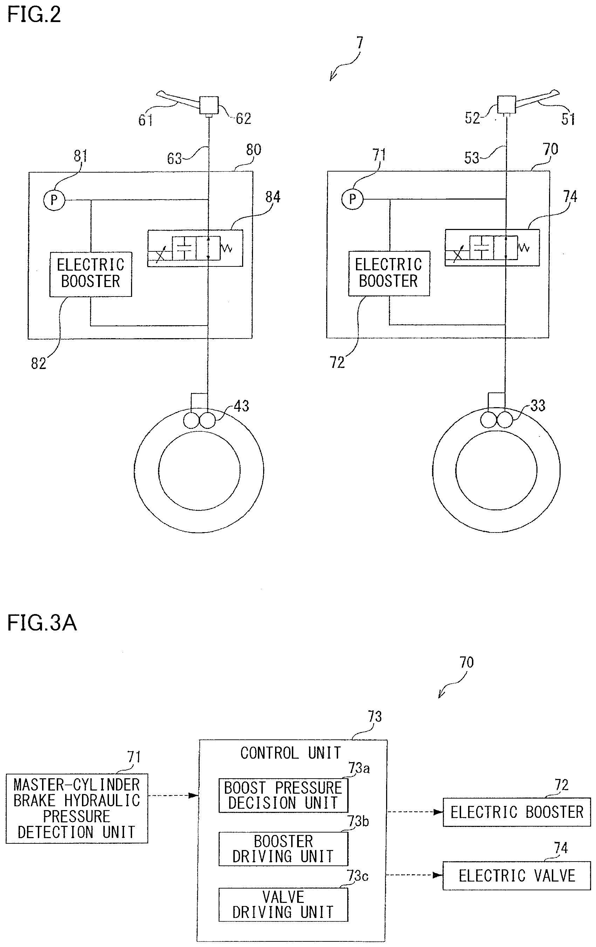

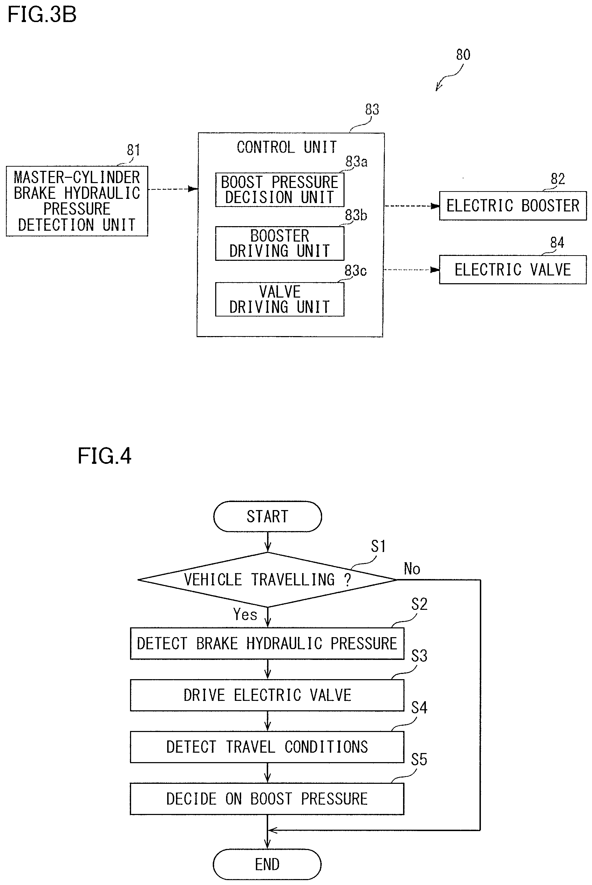

FIG. 2 schematically shows the construction of the brake system 7 of the motorcycle 1. FIGS. 3A and 3B are functional block diagrams of the front-wheel and rear-wheel brake servo devices 70 and 80 of the brake system 7. The brake system 7 includes a front-wheel wheel cylinder 33 provided on the front wheel 3 and a rear-wheel wheel cylinder 43 provided on the rear wheel 4. The brake system 7 further includes a front-wheel braking operation element 51 and a rear-wheel braking operation element 61 configured to be operable by a rider driving the motorcycle 1. The present embodiment provides brake levers supported on the handle 20 as examples of the front-wheel and rear-wheel braking operation elements 51 and 61. However, the front-wheel and rear-wheel braking operation elements 51 and 61 are not limited to these forms, and the rear-wheel braking operation element 61 may have the form of a brake pedal supported on the vehicle-body frame 2, for example.

The brake system 7 includes a front-wheel master cylinder 52 coupled to the front-wheel braking operation element 51 for generating a brake hydraulic pressure depending on operation power applied by the rider to the front-wheel braking operation element 51, and a rear-wheel master cylinder 62 coupled to the rear-wheel braking operation element 61 for generating a brake hydraulic pressure depending on operation power applied by the rider to the rear-wheel braking operation element 61. The front-wheel master cylinder 52 is connected to the front-wheel wheel cylinder 33 via a front-wheel brake fluid channel 53. That is, the front-wheel brake fluid channel 53 is a fluid channel between the front-wheel master cylinder 52 and front-wheel wheel cylinder 33. The rear-wheel master cylinder 62 is connected to the rear-wheel wheel cylinder 43 via a rear-wheel brake fluid channel 63. That is, the rear-wheel brake fluid channel 63 is a fluid channel between the rear-wheel master cylinder 62 and rear-wheel wheel cylinder 43. The front-wheel and rear-wheel brake fluid channels 53 and 63 are independent from each other.

The brake system 7 includes a front-wheel brake servo device 70 and a rear-wheel brake servo device 80. The front-wheel and rear-wheel brake servo devices 70 and 80 are supported on the vehicle body. Vehicle body as used herein means the portions of the vehicle excluding the wheel units. The wheel units include the front wheel 3 including the front-wheel brake 30 and the rear wheel 4 including the rear-wheel brake 40. Vehicle body is a concept that encompasses the vehicle-body frame 2, handle 20, etc. The front-wheel and rear-wheel brake servo devices 70 and 80 supported on the vehicle body are displaceable relative to the front and rear wheels 3 and 4, and do not prevent the front and rear wheels 3 and 4 from moving up and down.

A brake servo device or brake servo devices are provided on one or both of the front-wheel and rear-wheel brake fluid channels 53 and 63. In the implementation shown, a front-wheel brake servo device 70 is provided on the front-wheel brake fluid channel 53, while a rear-wheel brake servo device 80 is provided on the rear-wheel brake fluid channel 63.

The front-wheel brake servo device 70 includes: a front-wheel master-cylinder hydraulic pressure detection unit 71 for detecting a brake hydraulic pressure generated by the front-wheel master cylinder 52; at least one front-wheel electric booster 72; and a front-wheel booster control unit 73 for driving the front-wheel electric booster 72 based on signals from the front-wheel master-cylinder hydraulic pressure detection unit 71. The front-wheel brake servo device 70 is configured to be capable of boosting the brake hydraulic pressure to be received by the front-wheel wheel cylinder 33 depending on the brake hydraulic pressure generated by the front-wheel master cylinder 52.

Further, the rear-wheel brake servo device 80 includes: a rear-wheel master-cylinder hydraulic pressure detection unit 81 for detecting a brake hydraulic pressure generated by the rear-wheel master cylinder 62; at least one rear-wheel electric booster 82; and a control unit 83 for driving the rear-wheel electric booster 82 based on signals from the rear-wheel master-cylinder hydraulic pressure detection unit 81. The rear-wheel brake servo device 80 is configured to be capable of boosting the brake hydraulic pressure to be received by the rear-wheel wheel cylinder 43 depending on the brake hydraulic pressure generated by the rear-wheel master cylinder 62.

The front-wheel master-cylinder hydraulic pressure detection unit 71 may be a pressure sensor that detects the brake hydraulic pressure generated by the front-wheel master cylinder 52. The rear-wheel master-cylinder hydraulic pressure detection unit 81 may be a pressure sensor that detects the brake hydraulic pressure generated by the rear-wheel master cylinder 62. The front-wheel master-cylinder hydraulic pressure detection unit 71 outputs a signal corresponding to the brake hydraulic pressure detected by the front-wheel master-cylinder hydraulic pressure detection unit 71. The rear-wheel master-cylinder hydraulic pressure detection unit 81 outputs a signal corresponding to the brake hydraulic pressure detected by the rear-wheel master-cylinder hydraulic pressure detection unit 81.

The front-wheel booster control unit 73 includes a front-wheel boost pressure decision unit 73a. Based on signals from the front-wheel master-cylinder hydraulic pressure detection unit 71, the front-wheel boost pressure decision unit 73a can decide on a boost pressure by which the brake hydraulic pressure generated by the front-wheel master cylinder 52 is to be boosted. The rear-wheel booster control unit 83 includes a rear-wheel boost pressure decision unit 83a. Based on signals from the rear-wheel master-cylinder hydraulic pressure detection unit 81, the rear-wheel boost pressure decision unit 83a can decide on a boost pressure by which the brake hydraulic pressure generated by the rear-wheel master cylinder 62 is to be boosted.

The front-wheel booster controller unit 73 includes a front-wheel booster driving unit 73b. The front-wheel booster driving unit 73b drives the front-wheel electric booster 72 based on the boost pressure decided on by the front-wheel boost pressure decision unit 73a. The rear-wheel booster control unit 83 includes a rear-wheel booster driving unit 83b. The rear-wheel booster driving unit 83b drives the rear-wheel electric booster 82 based on the boost pressure decided on by the rear-wheel boost pressure decision unit 83a. The front-wheel and rear-wheel electric boosters 72 and 82 may be any devices capable of being driven electrically to boost a brake hydraulic pressure; examples include electrically driven gear pumps, electrically driven trochoid pumps, electrically driven piston pumps (including swash plate pumps), and electrically driven master cylinders. Preferably, the front-wheel and rear-wheel electric boosters 72 and 82 are pumps with small hydraulic-pressure variations.

The front-wheel wheel cylinder 33 is actuated by a brake hydraulic pressure generated by the front-wheel master cylinder 52 when at least the vehicle is stationary and the main switch is off and when the rider has operated the front-wheel braking operation element 51 that actuates the front-wheel master cylinder 52 by an operation amount at least equal to or larger than a predetermined reference operation amount.

When the motorcycle 1 is stationary and the main switch is off and the motorcycle 1 is being moved, the front-wheel wheel cylinder 33 is capable of generating the required braking force if the front-wheel braking operation element 51 is operated by an operation amount equal to or larger than a predetermined reference operation amount, since the motorcycle 1 is relatively light-weight and the motorcycle 1 is being moved at low speed. Thus, while at least the vehicle is stationary and the main switch is off or when the main switch is off and the rider is moving the motorcycle 1, and when the rider has operated the front-wheel braking operation element 51 that actuates the front-wheel master cylinder 52 by an operation amount at least equal to or larger than a predetermined reference operation amount, then, the front-wheel wheel cylinder 33 receives the brake hydraulic pressure generated by the front-wheel master cylinder 52, which has not been boosted by the front-wheel brake servo device 70, and is actuated by this pressure.

On the other hand, while the vehicle is travelling and when the rider has operated the front-wheel braking operation element 51 by an operation amount at least equal to or larger than a predetermined reference operation amount, the front-wheel wheel cylinder 33 is actuated by a brake hydraulic pressure resulting from a boost by the front-wheel brake servo device 70.

If the motorcycle 1 is travelling and the rider has operated the front-wheel braking operation element 51 by an operation amount equal to or larger than a predetermined reference operation amount, this means that, upon a rider operation, assistance may be provided in terms of braking force. Accordingly, while the vehicle is travelling and the rider has operated the front-wheel braking operation element 51 by an operation amount at least equal to or larger than a predetermined reference operation amount, the front-wheel wheel cylinder 33 is actuated by a brake hydraulic pressure resulting from a boost, by the front-wheel brake servo device 70, of the brake hydraulic pressure generated by the front-wheel master cylinder 52. It can be determined whether the vehicle is travelling based on the vehicle-body velocity, for example. For example, if the vehicle-body velocity is equal to or higher than a predetermined threshold (for example, 10km/h), the vehicle can be determined to be travelling. In this case, the vehicle can be determined to be travelling during the period between the point at which the vehicle-body velocity exceeds the threshold and the point at which it becomes zero.

In the straddled vehicle of the present embodiment, while the straddled vehicle is travelling and when the rider has applied a brake, assistance may be provided to the brake operation by the front-wheel brake servo device 70. When, after the rider turned off the main switch and the straddled vehicle has become stationary, the rider moves the straddled vehicle by pushing or pulling it, operation of the front-wheel brake servo device 70 can be prevented. This provides a straddled vehicle including a brake servo device that reduces electric power consumption and reduces the necessity to increase the size of the straddled vehicle.

The rear-wheel wheel cylinder 43 is actuated by a brake hydraulic pressure generated by the rear-wheel master cylinder 62 when at least the vehicle is stationary and the main switch is off and when the rider has operated the rear-wheel braking operation element 61 that actuates the rear-wheel master cylinder 62 by an operation amount at least equal to or larger than a predetermined reference operation amount.

When the motorcycle 1 is stationary and the main switch is off and the motorcycle 1 is being moved, the rear-wheel wheel cylinder 43 is capable of generating the required braking force if the rear-wheel braking operation element 61 is operated by an operation amount equal to or larger than a predetermined reference operation amount, since the motorcycle 1 is relatively light-weight and the motorcycle 1 is being moved at low speed. Thus, while at least the vehicle is stationary and the main switch is off or when the main switch is off and the rider is moving the motorcycle 1, and when the rider has operated the rear-wheel braking operation element 61 that actuates the rear-wheel master cylinder 62 by an operation amount at least equal to or larger than a predetermined reference operation amount, then, the rear-wheel wheel cylinder 43 receives the brake hydraulic pressure generated by the rear-wheel master cylinder 62, which has not been boosted by the rear-wheel brake servo device 80, and is actuated by this pressure.

On the other hand, while the vehicle is travelling and when the rider has operated the rear-wheel braking operation element 61 by an operation amount at least equal to or larger than a predetermined reference operation amount, the rear-wheel wheel cylinder 43 is actuated by a brake hydraulic pressure resulting from a boost by the rear-wheel brake servo device 80.

If the motorcycle 1 is travelling and the rider has operated the rear-wheel braking operation element 61 by an operation amount equal to or larger than a predetermined reference operation amount, this means that, upon a rider operation, assistance may be provided in terms of braking force. Accordingly, while the vehicle is travelling and the rider has operated the rear-wheel braking operation element 61 by an operation amount at least equal to or larger than a predetermined reference operation amount, the rear-wheel wheel cylinder 43 is actuated by a brake hydraulic pressure resulting from a boost, by the rear-wheel brake servo device 80, of the brake hydraulic pressure generated by the rear-wheel master cylinder 62.

"Reference operation amount" as used herein means an operation amount that serves as a reference for determining whether the brake hydraulic pressure should be boosted. For example, the reference operation amount may be a half of the total operation amount of the front-wheel and rear-wheel braking operation elements 51 and 61. Alternatively, a reference level of operation power may be pre-set based on experiment values and/or design values, and the operation amount that provides this level of operation power may serve as a reference operation amount. The front and rear wheels may have different reference operation amounts.

In the straddled vehicle of the present embodiment, while the straddled vehicle is travelling and when the rider has applied a brake, assistance may be provided to the brake operation by the rear-wheel brake servo device 80. When, after the rider turned off the main switch and the straddled vehicle has become stationary, the rider moves the straddled vehicle by pushing or pulling it, operation of the rear-wheel brake servo device 80 can be prevented. This provides a straddled vehicle including a brake servo device that reduces electric power consumption and reduces the necessity to increase the size of the straddled vehicle.

"The main switch is off" as used herein means not only that the mechanical main switch connected to the vehicle is off, but also that the software that controls the brake has determined that the main switch is off. Thus, for example, if the mechanical main switch is off during high-speed travel, the brake servo device may be actuated if the software that controls the brake has not determined that the main switch is off. If the vehicle is at a certain velocity threshold (for example 10 km/h) or higher, the brake servo device may continuously be actuated. Further, the brake servo device may continuously be actuated after the velocity of the vehicle exceeds a threshold and until the vehicle completely stops (0 km/h). In this case, the main switch is determined to be on after the velocity of the vehicle exceeds the threshold and until it becomes zero.

Patent Document 2, listed above, discloses brake system for a motorcycle. The brake system includes a brake caliper, a primary wheel cylinder and a secondary wheel cylinder for a disc brake for a wheel. The primary and secondary wheel cylinders can each actuate the brake caliper when supplied with a hydraulic pressure. An output port of a master cylinder operable by the operator is connected to the primary wheel cylinder. A servo hydraulic-pressure chamber for proportional pressure-intensifying valve is connected to the secondary wheel cylinder. The proportional pressure-intensifying valve draws, from a hydraulic pressure source including a hydraulic pump, a servo hydraulic pressure proportional to the output hydraulic pressure of the master cylinder.

The brake system of Patent Document 2 allows the operator to brake a wheel powerfully by applying relatively small operation power to the master cylinder. Further, as the hydraulic pressure source and proportional pressure-intensifying valve for applying a servo hydraulic pressure to the brake caliper are located higher than the suspension spring of the motorcycle, an increase in the load below the spring will be reduced.

As will be understood therefrom, in the context of a straddled vehicle such as a motorcycle, it is desired to minimize the weight of the wheel units, which move up and down relative to the vehicle body. In the straddled vehicle of the present embodiment, the front-wheel or rear-wheel brake servo device 70 or 80 is capable of boosting a brake hydraulic pressure. This makes it possible to reduce the size of the front-wheel brake caliper 32 or rear-wheel brake caliper 42. As a result, the present embodiment has the effect of reducing the weight of the wheel units moving up and down relative to the vehicle body while providing certain braking forces.

The front-wheel brake servo device 70 may include a front-wheel electric valve 74 provided on the front-wheel brake fluid channel 53 and capable of switching the front-wheel brake fluid channel 53 between communicated and disconnected states. The front-wheel electric booster 72 is connected to the front-wheel brake fluid channel 53. That is, a portion of the front-wheel brake fluid channel 53 is a front-wheel shared brake fluid channel that serves as a brake fluid channel connecting the front-wheel master cylinder 52 with the front-wheel wheel cylinder 33 and also as a brake fluid channel connecting the front-wheel electric booster 72 with the front-wheel wheel cylinder 33. The front-wheel electric valve 74 is positioned between the front-wheel master cylinder 52 and the point at which the front-wheel electric booster 72 is connected to the brake fluid channel 53. That is, the front-wheel electric valve 74 is provided between the front-wheel shared brake fluid channel and the front-wheel master cylinder 52.

The rear-wheel brake servo device 80 may include a rear-wheel electric valve 84 provided on the rear-wheel brake fluid channel 63 and capable of switching the rear-wheel brake fluid channel 63 between communicated and disconnected states. The rear-wheel electric booster 82 is connected to the rear-wheel brake fluid channel 63. That is, a portion of the rear-wheel brake fluid channel 63 is a rear-wheel shared brake fluid channel that serves as a brake fluid channel connecting the rear-wheel master cylinder 63 with the rear-wheel wheel cylinder 43 and also as a brake fluid channel connecting the rear-wheel electric booster 82 with the rear-wheel wheel cylinder 43. The rear-wheel electric valve 84 is positioned between the rear-wheel master cylinder 62 and the point at which the rear-wheel electric booster 82 is connected to the brake fluid channel 63. The electric valves 74 and 84 are driven by the valve driving units 73c and 83c of the control units 73 and 83. That is, the rear-wheel electric valve 84 is provided between the rear-wheel shared brake fluid channel and the rear-wheel master cylinder 62.

The front-wheel electric valve 74 is a valve that is in a communicating state when its solenoid is supplied with no electric current (i.e. normally open valve). When the vehicle is in the off state and the front-wheel braking operation element 51 that actuates the front-wheel master cylinder 52 is operated by the rider by an operation amount at least equal to or larger than a predetermined reference operation amount, the front-wheel electric valve 74 keeps the front-wheel brake fluid channel 53 in the communicating state. Off state means that at least the vehicle is stationary and the main switch is off, or that the main switch is off and the rider is moving the vehicle. As the front-wheel electric valve 74 keeps the front-wheel brake fluid channel 53 in the communicating state, the front-wheel wheel cylinder 33 is actuated by any brake hydraulic pressure generated by the front-wheel master cylinder 52. On the other hand, while the vehicle is travelling and when the rider has operated the front-wheel braking operation element 51 by an operation amount at least equal to or larger than a predetermined reference operation amount, then, the front-wheel electric valve 74 is capable of switching the front-wheel brake fluid channel 53 to the disconnected state. As the front-wheel electric valve 74 switches the front-wheel brake fluid channel 53 to the disconnected state, the front-wheel wheel cylinder 33 is actuated by any brake hydraulic pressure resulting from a boost by the electric booster 72.

The rear-wheel electric valve 84 is a valve that is in a communicating state when its solenoid is supplied with no electric current (i.e. normally open valve). When the vehicle is in the off state and the rear-wheel braking operation element 61 that actuates the rear-wheel master cylinder 62 is operated by the rider by an operation amount at least equal to or larger than a predetermined reference operation amount, the rear-wheel electric valve 84 keeps the rear-wheel brake fluid channel 63 in the communicating state. Off state means that at least the vehicle is stationary and the main switch is off, or that the main switch is off and the rider is moving the vehicle. As the rear-wheel electric valve 84 keeps the rear-wheel brake fluid channel 63 in the communicating state, the rear-wheel wheel cylinder 43 is actuated by any brake hydraulic pressure generated by the rear-wheel master cylinder 62. On the other hand, while the vehicle is travelling and when the rider has operated the rear-wheel braking operation element 61 by an operation amount at least equal to or larger than a predetermined reference operation amount, then, the rear-wheel electric valve 84 is capable of switching the rear-wheel brake fluid channel 63 to the disconnected state. As the rear-wheel electric valve 84 switches the rear-wheel brake fluid channel 63 to the disconnected state, the rear-wheel wheel cylinder 43 is actuated by any brake hydraulic pressure resulting from a boost by the electric booster 82.

The motorcycle 1 may include a travel condition detection unit for detecting vehicle conditions relating to the travel of the vehicle. The vehicle conditions relating to the travel of the vehicle include, for example, vehicle-body velocity, pitch angle, roll angle, etc. Examples of travel condition detection units may be the IMU 22, vehicle-body velocity detection unit 25, pitch angle detection unit 26, and roll angle detection unit 27.

While the vehicle is travelling and when the rider has operated the front-wheel braking operation element 51 by an operation amount at least equal to or larger than a predetermined reference operation amount, the front-wheel booster control unit 73 drives the front-wheel electric booster 72 based on signals from the travel condition detection unit(s) and signals from the front-wheel master-cylinder hydraulic pressure detection unit 71. The front-wheel booster control unit 73 is capable of ensuring that the brake hydraulic pressure resulting from boosting the brake hydraulic pressure generated by the front-wheel or rear-wheel master cylinder 52 or 62 by a ratio depending on the vehicle conditions relating to the travel of the vehicle acts on the front-wheel or rear-wheel master cylinder 52 or 62. The ratio for the boost depending on the vehicle conditions relating to the travel of the vehicle is decided on by the boost pressure decision unit 73a.

While the vehicle is travelling and when the rider has operated the rear-wheel braking operation element 61 by an operation amount at least equal to or larger than a predetermined reference operation amount, the rear-wheel booster control unit 83 drives the rear-wheel electric booster 82 based on signals from the travel condition detection unit(s) and signals from the rear-wheel master-cylinder hydraulic pressure detection unit 81. The rear-wheel booster control unit 83 is capable of ensuring that the brake hydraulic pressure resulting from boosting the brake hydraulic pressure generated by rear-wheel master cylinder 62 by a ratio depending on the vehicle conditions relating to the travel of the vehicle acts on the rear-wheel master cylinder 62. The ratio for the boost depending on the vehicle conditions relating to the travel of the vehicle is decided on by the boost pressure decision unit 83a.

The controls of the front-wheel and rear-wheel brake servo devices 70 and 80 will be described with reference to FIG. 4. FIG. 4 is a flow chart of a procedure in which the front-wheel and rear-wheel brake servo devices 70 and 80 are controlled.

First, as shown in FIG. 4, it is determined whether the vehicle is travelling (step S1). Whether the vehicle is travelling or not may be determined by the vehicle-body velocity detection unit 25, for example. If the vehicle is stationary, the valve driving units 73c and 83c do not drive the electric valves 74 and 84, keeping in the communicated state the brake fluid channels 53 and 63 connecting the master cylinders 52 and 62 with the wheel cylinders 33 and 43. As such, the brake hydraulic pressures in the brake fluid channels 53 and 63 are not boosted. The valve driving units 73c and 83c may be configured not to drive the electric valves 74 and 84 when a boost is not needed. In this case, when the electric valves 74 and 84 are not being driven, the booster driving units 73b and 83b do not drive the electric boosters 72 and 82.

When the vehicle is travelling, the master-cylinder hydraulic pressure detection units 71 and 81 detect the brake hydraulic pressures generated by the front-wheel and rear-wheel master cylinders 52 and 62 (step S2).

Subsequently, the valve driving units 73c and 83c drive the electric valves 74 and 84 to switch the brake fluid channels 53 and 63 connecting the master cylinders 52 and 62 with the wheel cylinders 33 and 43 to the disconnected state (step S3).

Subsequently, the travel condition detection unit detects the travel conditions of the vehicle (step S4).

The boost pressure decision unit 73a and 83a decides on a boost pressure depending on the travel conditions of the vehicle detected by the travel condition detection unit (step S5). The booster driving units 73b and 83b drive the electric boosters 72 and 82 based on the booster pressures decided on by the boost pressure decision units 73a and 83a.

### (Embodiment 2)

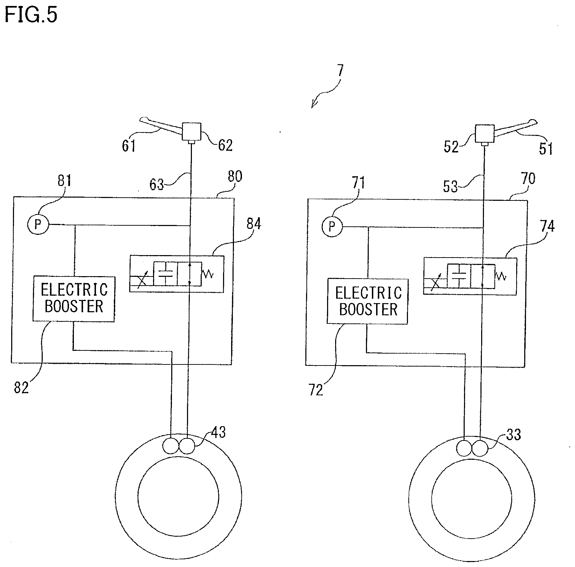

Embodiment 1 describes an implementation where each boosted-brake-fluid channel shares a portion with the associated one of the brake fluid channels 53 and 73 connecting the master cylinder 52 or 62 with the wheel cylinder 33 or 43. FIG. 5 shows the configuration of a brake servo device according to Embodiment 2. In the implementation shown in FIG. 5, each of the boosted-brake-fluid channels connecting the associated one of the electric boosters 72 and 82 with the associated one of the wheel cylinders 33 and 43 may be independent from the associated one of the brake fluid channels connecting the master cylinder 52 or 62 with the wheel cylinder 33 or 43. That is, in the implementation shown in FIG. 5, the brake fluid channel between the front-wheel electric booster 72 and front-wheel wheel cylinder 33 is independent from the brake fluid channel between the front-wheel master cylinder 52 and front-wheel wheel cylinder 33.

### [Other Embodiments]

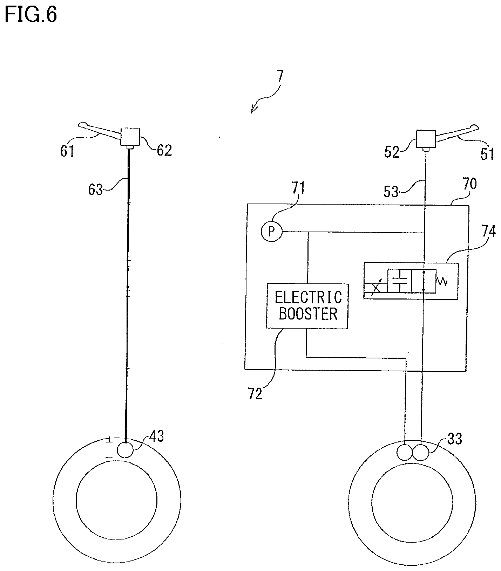

(1) The control unit 73 is capable of basically driving the electric booster 72 while the vehicle is travelling and when the rider has operated the front-wheel braking operation element. This allows the brake hydraulic pressure resulting from a boost by the electric booster 72 to act on the front-wheel wheel cylinder 33. "Basically" as used herein means that, while the vehicle is travelling, the electric booster is almost always driven to boost the brake hydraulic pressure. Basically, the electric booster 72 is driven while the vehicle is travelling and when the front-wheel braking operation element 51 has been operated. This makes it possible to reduce the size of the front-wheel brake 30 provided on the front wheel 3. This reduces the weight of the front-wheel unit, which moves up and down relative to the vehicle body. The control unit 83 is capable of basically driving the electric booster 82 while the vehicle is travelling and when the rider has operated the rear-wheel braking operation element 61. This allows the brake hydraulic pressure resulting from a boost by the electric booster 82 to act on the rear-wheel wheel cylinder 43. Basically, the electric booster 82 is driven while the vehicle is travelling and when the rear-wheel braking operation element 61 has been operated. This makes it possible to reduce the size of the rear-wheel brake 40 provided on the rear wheel 4. This reduces the weight of the rear-wheel unit, which moves up and down relative to the vehicle body.
(2) While the vehicle is travelling and when the rider has operated the front-wheel braking operation element 51 by an operation amount at least equal to or larger than a predetermined reference operation amount, the control unit 73 may cause a brake hydraulic pressure obtained by boosting, by a predetermined ratio, the brake hydraulic pressure generated by the front-wheel master cylinder 52 to act on the front-wheel wheel cylinder 33. While the vehicle is travelling and when the rider has operated the rear-wheel braking operation element 61 by an operation amount at least equal to or larger than a predetermined reference operation amount, the control unit 83 may cause a brake hydraulic pressure obtained by boosting, by a predetermined ratio, the brake hydraulic pressure generated by the rear-wheel master cylinder 62 to act on the rear-wheel wheel cylinder 43.
(3) As described above, a brake servo device may be provided on each of the front and rear wheels 3 and 4; alternatively, a brake servo device may be provided on only one of the front and rear wheels 3 and 4. FIG. 6 shows an implementation where a front-wheel brake servo device 70 is provided for the front wheel 3 and no brake servo device is provided for the rear wheel 4. Although not shown, no brake servo device may be provided for the front wheel 3 while a rear brake servo device may be provided for the rear wheel 4.
(4) A brake servo device may be combined with an ABS device or an interlock braking apparatus. Further, a portion of a brake servo device may serve as part of an ABS device or interlock braking apparatus. An ABS device may be provided on at least one of the front and rear wheels. The ABS device reduces the brake hydraulic pressure being applied by the master cylinder to the wheel cylinder when the slip ratio of the wheel exceeds a threshold. The brake servo device may operate independently from the pressure reduction by the ABS. That is, the brake servo device may boost the brake hydraulic pressure in the wheel cylinder regardless of whether the ABS device is operating or not. Alternatively, the brake servo device may be controlled to boost or not boost the brake hydraulic pressure depending on the actuation state of the ABS device. For example, the brake servo device may be configured not to boost the brake hydraulic pressure in the wheel cylinder when the ABS device is keeping the brake hydraulic pressure in the wheel cylinder at low level.

A brake servo device is capable of providing to the wheel cylinder a brake hydraulic pressure higher than a brake hydraulic pressure in the master cylinder generated by an operation of the braking operation element by the rider. That is, a brake servo device increases a brake pressure in the master cylinder generated by an operation of the braking operation element by the rider. A brake hydraulic-pressure control device that does not provide a brake hydraulic pressure exceeding a brake hydraulic pressure in the master cylinder generated by an operation by the rider is different from a brake servo device. For example, a pump that increases the brake hydraulic pressure that has decreased at the time of ABS activation within a brake hydraulic-pressure range in the master cylinder generated by a rider operation cannot be considered to be a brake servo device.

The ECU in the above embodiments is an example of the control device for controlling the straddled vehicle. The control device may be a device for electrically controlling the straddled vehicle. The control device is supplied with electric power from the battery mounted on the straddled vehicle and operates. The control device may control at least some of the functions of the straddled vehicle that are electrically controlled. For example, the control device may include at least one of the front-wheel and rear-wheel booster control units.

The main switch may be a switch that switches the control device between an operational state and a non-operational state. The operational and non-operational states of the control device may be, for example, a power-on state where electric power is being supplied from the battery and a power-off state where no electric power is being supplied from the battery. Alternatively, the operational and non-operational states may be a first state where predetermined operations can be performed and a second state where the electric power consumption and the number of operations that can be performed are smaller than those for the first state. Thus, the main switch may be a switch that switches between electric power being supplied to the control device and no electric power being supplied, or changes the amount of electric power being supplied. The main switch may be switched between on and off by an operation by the rider, for example. Alternatively, the main switch may be switched between on and off based on, for example, an operation by the rider and a vehicle condition. The vehicle condition may be, for example, vehicle-body velocity, the rotation of a wheel or a drive condition of the engine.

The main switch may be a switch that starts the control device. For example, when the main switch is switched from off to on, the control device (non-operational) is started. When the main switch is switched from on to off, the control device (operational) is switched to the non-operational state. The time point at which the rider switches the main switch may not necessarily be the same time point at which the main switch is turned between on and off. For example, when the rider manually switches the main switch from off to on, the main switch is switched from off to on. When the rider manually switches the main switch from on to off, the main switch may be configured to be turned off when the vehicle-body velocity becomes zero after the rider manually switched off the main switch. In this case, if the vehicle-body velocity of the straddled vehicle is not zero when the rider manually switches the main switch from on to off, the main switch is kept on and the control device is kept operational. Thereafter, when the vehicle-body velocity becomes zero, the main switch is turned from on to off, and the control device is switched from the operational state to the non-operational state.

The off state, where the main switch is off and the straddled vehicle is stationary or where the main switch is off and the rider is moving the straddled vehicle, may start when the straddled vehicle is stationary and the main switch is turned off and when the main switch is turned on again, for example. Thus, it is determined whether the vehicle is in the off state based on whether the main switch is on or off. Alternatively, it may be determined whether the vehicle is in the off state based on whether the main switch is on or off and on a vehicle condition. In this case, the vehicle condition may be a physical quantity relating to a travel condition of the straddled vehicle, such as vehicle-body velocity or the rotation of a wheel, for example.

The straddled vehicle may also be configured such that the engine is stopped while the main switch is off. In this case, the engine is stopped while the vehicle is in the off state. When the main switch is switched from off to on, the engine, which has been stopped, is started, and, when the main switch is switched from on to off, the engine, which has been driven, is stopped. The period during which the main switch is on may include a period where the engine is stopped. That is, although the engine is driven as a rule while the vehicle is in the on state, there may be a period in which the engine is stopped while the vehicle is in the on state.

For example, when the rider operates the front-wheel braking operation element in a portion of the period for the on state, the front-wheel wheel cylinder may be configured to be actuated by the brake hydraulic pressure resulting from a boost by the front-wheel brake servo device. In this case, for example, the brake hydraulic pressure in the front-wheel wheel cylinder may be boosted when a predetermined condition is met while the vehicle is in the on state. Alternatively, in the entire period for the on state, when the rider has operated the front-wheel braking operation element, the front-wheel wheel cylinder may be configured to be actuated by the brake hydraulic pressure resulting from a boost by the front-wheel brake servo device.

The arrangement may be controlled by an electric valve to do a boost or not do a boost while the vehicle is in the on state. For example, when a boost is necessary while the vehicle is in the on state, the front-wheel electric valve may be configured to switch the front-wheel brake fluid channel to the disconnected state. In this case, the front-wheel wheel cylinder is actuated by the brake hydraulic pressure resulting from a boost by the front-wheel brake servo device while the front-wheel brake fluid channel is in the disconnected state. That is, in at least a portion of the period for the on state the front-wheel electric valve may keep the front-wheel brake fluid channel in the disconnected state and the front-wheel brake servo device may generate, in the front-wheel wheel cylinder, the brake hydraulic pressure obtained by boosting the brake hydraulic pressure in the front-wheel master cylinder.

Further, when the rider has operated the rear-wheel braking operation element in a portion of the period for the on state, the rear-wheel wheel cylinder may be configured to be actuated by the brake hydraulic pressure resulting from a boost by the rear-wheel brake servo device. In this case, for example, the brake hydraulic pressure in the front-wheel wheel cylinder may be configured to be boosted if a predetermined condition is met while the vehicle is in the on state. Alternatively, the rear-wheel wheel cylinder may be configured to be actuated by the brake hydraulic pressure resulting from a boost by the rear-wheel brake servo device when the rider has operated the rear-wheel braking operation element in the entire period for the on state.

The arrangement may be controlled by an electric valve to do a boost or not do a boost while the vehicle is in the on state. For example, when a boost is necessary while the vehicle is in the on state, the rear-wheel electric valve may be configured to switch the rear-wheel brake fluid channel to the disconnected state. In this case, the rear-wheel wheel cylinder is actuated by the brake hydraulic pressure resulting from a boost by the rear-wheel brake servo device while the rear-wheel brake fluid channel is in the disconnected state. That is, in at least a portion of the period for the on state, the rear-wheel electric valve may keep the rear-wheel brake fluid channel in the disconnected state and the rear-wheel brake servo device may generate, in the rear-wheel wheel cylinder, the brake hydraulic pressure obtained by boosting the brake hydraulic pressure in the rear-wheel master cylinder.

The brake servo device may be configured to have no accumulator. In this case, the brake servo device may change the output of the electric booster to achieve a variable brake hydraulic pressure for a boost, thereby adjusting this pressure. The brake servo device is not limited to arrangements with no accumulator. For example, the brake servo device may include a hydraulic pump and an accumulator. In this case, the accumulator of the brake servo device accumulates the hydraulic pressure output from the hydraulic pump and supplies a certain hydraulic pressure. The brake servo device uses a hydraulic pressure supplied by the accumulator to boost the brake hydraulic pressure in the wheel cylinder. When the hydraulic pressure in the accumulator drops below a lower limit, the hydraulic pump may be actuated; when the hydraulic pressure in the accumulator has reached a target level, the hydraulic pump may be stopped.

The front-wheel electric valve makes the cross-sectional area of the bore of the front-wheel brake fluid channel variable. The rear-wheel electric valve makes the cross-sectional area of the bore of the rear-wheel brake fluid channel variable. At least one of the front-wheel and rear-wheel electric valves may switch the brake fluid channel between a communicated state and a disconnected state, or may be configured to squeeze the bore of the brake fluid channel like a faucet. The electric valve leaves the brake fluid channel in the communicated state when the straddled vehicle is in the off state. In at least a portion of the period where the straddled vehicle is in the on state, the brake fluid channel may be held in the disconnected state, or the bore of the brake fluid channel may be squeezed.

The state where the straddled vehicle is travelling, i.e. the vehicle travel state, is different from the state where the rider is moving the straddled vehicle. The vehicle travel state is a state where the straddled vehicle is caused to travel by driving power generated by a driving power source such as an engine or motor included in the straddled vehicle. The state where the rider is moving the straddled vehicle is a state where the rider is moving the straddled vehicle solely with his own power without relying on driving power from the driving power source of the straddled vehicle.

The travel condition detection unit is not limited to the above-illustrated examples. The travel condition detection unit may be any other sensor that detects a physical quantity representing a vehicle condition relating to the travel of the vehicle. Other physical quantities representing a vehicle condition relating to the travel of the vehicle may be, for example, a physical quantity relating to engine output, a physical quantity relating to the movement of a wheel, or a physical quantity relating to the road surface on which the straddled vehicle is travelling. The physical quantity relating to engine output may be, for example, engine rotation number or throttle opening. The physical quantity relating to the movement of a wheel may be, for example, the slip ratio of the wheel or the displacement, velocity or acceleration in the direction perpendicular to the direction in which the wheel is advancing. The physical quantity relating to the road surface on which the straddled vehicle is travelling may be, for example, the coefficient of friction of the road surface (µ value) or the inclination of the road surface.

The ratio of the brake hydraulic pressure of the wheel cylinder relative to the brake hydraulic pressure of the master cylinder may be decided on based on detected vehicle conditions. In this case, the brake servo device may store in advance the correspondence between the vehicle conditions and the ratio of brake hydraulic pressures in the form of data or a program, for example. In this case, the brake servo device may use the stored correspondence to decide on a ratio depending on the detected vehicle conditions.

The vehicle-body frame is a member for receiving stresses acting on the leaning vehicle during travel. For example, examples of the vehicle-body frame include a monocoque (stress skin construction), semi-monocoque, or a construction where vehicle parts also serve to receive stresses. For example, parts such as the engine or air cleaner may form part of the vehicle-body frame.

The front-wheel master-cylinder hydraulic pressure detection unit may directly detect the brake hydraulic pressure in the front-wheel master cylinder, or estimate the brake hydraulic pressure in the front-wheel master cylinder based on physical quantities relating to the operation amount of the front-wheel braking operation element. The rear-wheel master-cylinder hydraulic pressure detection unit may directly detect the brake hydraulic pressure in the rear-wheel master cylinder, or estimate the brake hydraulic pressure in the rear-wheel master cylinder based on physical quantities relating to the operation amount of the rear-wheel braking operation element.

The bar handle includes a bar extending in the left-right direction of the straddled vehicle and rotatably supported on the vehicle-body frame. The bar of the bar handle may be composed of a single bar, or may be composed of two bars, to the left and right, connected to each other. For example, the left and right bars of the bar handle may be separate parts. That is, the bar handle may be a separate handle. A left grip is provided on the left end of the bar of the bar handle. A right grip is provided on the right end of the bar. The bar handle may swing in a range of 180 degrees (i.e. half rotation) or smaller. This swing range is represented by the difference between the steering angle found when the bar handle is operated to the leftmost and the steering angle found when the bar handle is operated to the rightmost (i.e. lock-to-lock).

The front-wheel and rear-wheel braking operation elements may be supported on the bar handle. In such implementations, for example, each of the front-wheel and rear-wheel braking operation elements may be a lever extending along the left or right grip of the bar handle. The rider may operate the front-wheel and rear-wheel braking operation elements with his hand. Alternatively, one of the front-wheel and rear-wheel braking operation elements may be a brake lever supported on the bar handle and the other may be a brake pedal positioned to be operable by the rider with his foot.

### EXPLANATION OF CHARACTERS

- 1: straddled vehicle
- 2: vehicle-body frame
- 3: front wheel
- 4: rear wheel
- 20: handle
- 30: front-wheel brake
- 33: front-wheel wheel cylinder
- 40: rear-wheel brake
- 43: rear-wheel wheel cylinder
- 51: front-wheel braking operation element
- 52: front-wheel master cylinder
- 53: front-wheel brake fluid channel
- 61: rear-wheel braking operation element
- 62: rear-wheel master cylinder
- 63: rear-wheel brake fluid channel
- 70: brake servo device
- 71: master-cylinder hydraulic pressure detection unit
- 72: electric booster
- 73: control unit
- 74: electric valve
- 80: brake servo device
- 81: master-cylinder hydraulic pressure detection unit
- 82: electric booster
- 83: control unit
- 84: electric valve

## Claims

1. A straddled vehicle (1) comprising:
a vehicle body;
a front wheel (3) and a rear wheel (4) supported on the vehicle body;
a front-wheel brake (30) provided on the front wheel (3) and including a front-wheel wheel cylinder (33) for generating a braking force for the front wheel (3);
a front-wheel braking operation element (51) operable by a rider;
a front-wheel master cylinder (52) actuatable by an operation of the front-wheel braking operation element (51);
a front-wheel brake fluid channel (53) connecting the front-wheel master cylinder (52) to the front-wheel wheel cylinder (33);
a rear-wheel brake (40) provided on the rear wheel (4) and including a rear-wheel wheel cylinder (43) for generating a braking force for the rear wheel (4);
a rear-wheel braking operation element (61) operable by the rider;
a rear-wheel master cylinder (62) actuatable by an operation of the rear-wheel braking operation element (61);
a rear-wheel brake fluid channel (63) connecting the rear-wheel master cylinder (62) to the rear-wheel wheel cylinder (43);
a bar handle (20), at least one of the front-wheel braking operation element (51) and the rear-wheel braking operation element (61) being supported on the bar handle (20), the bar handle (20) configured to be capable of changing a direction of the front wheel (3);
a control device configured to control the straddled vehicle (1); and
a main switch configured to start the control device,
the front-wheel brake fluid channel (53) being independent from the rear-wheel brake fluid channel (63),
the straddled vehicle (1) further comprising:
a front-wheel master-cylinder hydraulic pressure detection unit (71) configured to detect a brake hydraulic pressure generated in the front-wheel master cylinder (52), or a rear-wheel master-cylinder hydraulic pressure detection unit (81) configured to detect a brake hydraulic pressure generated in the rear-wheel master cylinder (62),
the straddled vehicle (1) further comprising:
a front-wheel brake servo device (70) configured to boost a brake hydraulic pressure in the front-wheel wheel cylinder (33) based on the brake hydraulic pressure detected by the front-wheel master-cylinder hydraulic pressure detection unit (71), or a rear-wheel brake servo device (80) configured to boost a brake hydraulic pressure in the rear-wheel wheel cylinder (43) based on the brake hydraulic pressure detected by the rear-wheel master-cylinder hydraulic pressure detection unit (81),
wherein, when the rider has operated the front-wheel braking operation element (51) while the vehicle (1) is in an off state where the main switch is off and the straddled vehicle (1) is stationary or where the main switch is off and the rider is moving the straddled vehicle (1), the front-wheel wheel cylinder (33) is actuated by the brake hydraulic pressure generated by the front-wheel master cylinder (52) without receiving a brake hydraulic pressure resulting from a boost by the front-wheel brake servo device (70), and, when the rider has operated the front-wheel braking operation element (51) in at least a portion of a period for an on state other than the off state, the front-wheel wheel cylinder (33) is actuated by the brake hydraulic pressure resulting from the boost by the front-wheel brake servo device (70), or
when the rider has operated the rear-wheel braking operation element (61) while the vehicle (1) is in the off state where the main switch is off and the straddled vehicle (1) is stationary or where the main switch is off and the rider is moving the straddled vehicle (1), the rear-wheel wheel cylinder (43) is actuated by the brake hydraulic pressure generated by the rear-wheel master cylinder (62) without receiving a brake hydraulic pressure resulting from a boost by the rear-wheel brake servo device (80), and, when the rider has operated the rear-wheel braking operation element (61) in at least a portion of the period for the on state other than the off state, the rear-wheel wheel cylinder (43) is actuated by the brake hydraulic pressure resulting from the boost by the rear-wheel brake servo device (80).

2. The straddled vehicle (1) according to claim 1, wherein the front-wheel brake servo device (70) includes no accumulator and includes a front-wheel electric motor configured to generate the brake hydraulic pressure in the front-wheel wheel cylinder (33), or
the rear-wheel brake servo device (80) includes no accumulator and includes a rear-wheel electric motor configured to generate the brake hydraulic pressure in the rear-wheel wheel cylinder (43).

3. The straddled vehicle (1) according to claim 1 or 2, wherein the front-wheel brake servo device (70) includes: a front-wheel electric valve (74) provided on the front-wheel brake fluid channel (53) for switching the front-wheel brake fluid channel (53) between a disconnected state and a communicated state, the front-wheel electric valve (74) being configured to cause the front-wheel brake fluid channel (53) to be in the communicated state when the vehicle (1) is in the off state, or
the rear-wheel brake servo device (80) includes a rear-wheel electric valve (84) provided on the rear-wheel brake fluid channel (63) for switching the rear-wheel brake fluid channel (63) between a disconnected state and a communicated state, the rear-wheel electric valve (84) being configured to cause the rear-wheel brake fluid channel (63) to be in the communicated state when the vehicle (1) is in the off state.

4. The straddled vehicle (1) according to any one of claims 1 to 3, wherein the front-wheel brake servo device (70) includes a front-wheel electric booster (72) configured to boost the brake hydraulic pressure in the front-wheel wheel cylinder (33) and a front-wheel booster control unit (73) configured to drive the front-wheel electric booster (72) based on a signal from the front-wheel master-cylinder hydraulic pressure detection unit (71), the front-wheel booster control unit (73) being configured to drive the front-wheel electric booster (72) such that a brake hydraulic pressure resulting from a boost by the front-wheel electric booster (72) is variable such that the brake hydraulic pressure in the front-wheel wheel cylinder (33) is variable, or
the rear-wheel brake servo device (80) includes a rear-wheel electric booster (82) configured to boost the brake hydraulic pressure in the rear-wheel wheel cylinder (43) and a rear-wheel booster control unit (83) configured to drive the rear-wheel electric booster (82) based on a signal from the rear-wheel master-cylinder hydraulic pressure detection unit (81), the rear-wheel booster control unit (83) being configured to drive the rear-wheel electric booster (82) such that a brake hydraulic pressure resulting from a boost by the rear-wheel electric booster (82) is variable such that the brake hydraulic pressure in the rear-wheel wheel cylinder (43) is variable.

5. The straddled vehicle (1) according to claim 4, wherein the front-wheel electric booster (72) or the rear-wheel electric booster (82) is an electrically driven gear pump, an electrically driven trochoid pump, an electrically driven piston pump, or an electrically driven master cylinder.

6. The straddled vehicle (1) according to any one of claims 1 to 5, wherein, when the rider has operated the front-wheel braking operation element (51) in at least a portion of the period for the on state, the front-wheel wheel cylinder (33) is actuated by the brake hydraulic pressure resulting from the boost by the front-wheel brake servo device (70) while the front-wheel brake fluid channel (53) is in the communicated state, or
when the rider has operated the rear-wheel braking operation element (61) in at least a portion of the period for the on state, the rear-wheel wheel cylinder (43) is actuated by the brake hydraulic pressure resulting from the boost by the rear-wheel brake servo device (80) while the rear-wheel brake fluid channel (63) is in the communicated state.

7. The straddled vehicle (1) according to any one of claims 1 to 5, wherein, when the rider has operated the front-wheel braking operation element (51) in at least a portion of the period for the on state, the front-wheel wheel cylinder (33) is actuated by the brake hydraulic pressure resulting from the boost by the front-wheel brake servo device (70) while the front-wheel brake fluid channel (53) is in the disconnected state, or
when the rider has operated the rear-wheel braking operation element (61) in at least a portion of the period for the on state, the rear-wheel wheel cylinder (43) is actuated by the brake hydraulic pressure resulting from the boost by the rear-wheel brake servo device (80) while the rear-wheel brake fluid channel (63) is in the disconnected state.

8. The straddled vehicle (1) according to any one of claims 1 to 7, wherein, when the rider has operated the front-wheel braking operation element (51) in at least a portion of the period for the on state, the front-wheel wheel cylinder (33) is actuated by the brake hydraulic pressure resulting from boosting, by a predetermined ratio, the brake hydraulic pressure generated by the front-wheel master cylinder (52), or,
when the rider has operated the rear-wheel braking operation element (61) in at least a portion of the period for the on state, the rear-wheel wheel cylinder (43) is actuated by the brake hydraulic pressure resulting from boosting, by a predetermined ratio, the brake hydraulic pressure generated by the rear-wheel master cylinder (62).

9. The straddled vehicle (1) according to any one of claims 1 to 7, wherein the straddled vehicle (1) comprises a travel condition detection unit (22, 25, 26, 27) configured to detect a vehicle (1) condition relating to a travel of the straddled vehicle (1),
wherein, when the rider has operated the front-wheel braking operation element (51) in at least a portion of the period for the on state, the front-wheel wheel cylinder (33) is actuated by a brake hydraulic pressure resulting from boosting, by a ratio based on the vehicle condition detected by the travel condition detection unit (22, 25, 26, 27), the brake hydraulic pressure generated by the front-wheel master cylinder (52), or,
when the rider has operated the rear-wheel braking operation element (61) in at least a portion of the period for the on state, the rear-wheel wheel cylinder (43) is actuated by a brake hydraulic pressure resulting from boosting, by the ratio based on the vehicle condition detected by the travel condition detection unit (22, 25, 26, 27), the brake hydraulic pressure generated by the rear-wheel master cylinder (62).

10. The straddled vehicle (1) according to any one of claims 1 to 9, wherein the front-wheel braking operation element (51) is a brake lever supported on the bar handle (20).

11. The straddled vehicle (1) according to any one of claims 1 to 10, wherein the rear-wheel braking operation element (61) is a brake pedal provided on the vehicle body.

12. The straddled vehicle (1) according to any one of claims 1 to 11, wherein the front-wheel brake servo device (70) or the rear-wheel brake servo device (80) is supported on the vehicle body.

## Patentansprüche

1. Ein Grätschfahrzeug (1), das folgende Merkmale aufweist:
einen Fahrzeugkörper;
ein Vorderrad (3) und ein Hinterrad (4), die an dem Fahrzeugkörper gelagert sind;
eine Vorderradbremse (30), die an dem Vorderrad (3) vorgesehen ist und einen Vorderrad-Radzylinder (33) zum Erzeugen einer Bremskraft für das Vorderrad (3) umfasst;
ein Vorderrad-Bremsbedienelement (51), das durch einen Fahrer bedient werden kann;
einen Vorderrad-Hauptzylinder (52), der durch eine Bedienung des Vorderrad-Bremsbedienelements (51) betätigt werden kann;
einen Vorderrad-Bremsfluidkanal (53), der den Vorderrad-Hauptzylinder (52) mit dem Vorderrad-Radzylinder (33) verbindet;
eine Hinterradbremse (40), die an dem Hinterrad (4) vorgesehen ist und einen Hinterrad-Radzylinder (43) zum Erzeugen einer Bremskraft für das Hinterrad (4) umfasst;
ein Hinterrad-Bremsbedienelement (61), das durch den Fahrer bedient werden kann;
einen Hinterrad-Hauptzylinder (62), der durch eine Bedienung des Hinterrad-Bremsbedienelements (61) betätigt werden kann;
einen Hinterrad-Bremsfluidkanal (63), der den Hinterrad-Hauptzylinder (62) mit dem Hinterrad-Radzylinder (43) verbindet;
einen Stangengriff (20), wobei zumindest eines des Vorderrad-Bremsbedienelements (51) und des Hinterrad-Bremsbedienelements (61) an dem Stangengriff (20) gelagert ist, wobei der Stangengriff (20) dazu ausgebildet ist, in der Lage zu sein, eine Richtung des Vorderrads (3) zu verändern;
eine Steuervorrichtung, die dazu ausgebildet ist, das Grätschfahrzeug (1) zu steuern; und
einen Hauptschalter, der dazu ausgebildet ist, die Steuervorrichtung zu starten,
wobei der Vorderrad-Bremsfluidkanal (53) unabhängig von dem Hinterrad-Bremsfluidkanal (63) ist,
wobei das Grätschfahrzeug (1) ferner folgendes Merkmal aufweist:
eine Vorderrad-Hauptzylinder-Hydraulikdruck-Erfassungseinheit (71), die dazu ausgebildet ist, einen Bremshydraulikdruck zu erfassen, der in dem Vorderrad-Hauptzylinder (52) erzeugt wird, oder eine Hinterrad-Hauptzylinder-Hydraulikdruck-Erfassungseinheit (81), die dazu ausgebildet ist, einen Bremshydraulikdruck zu erfassen, der in dem Hinterrad-Hauptzylinder (62) erzeugt wird,
wobei das Grätschfahrzeug (1) ferner folgendes Merkmal aufweist:
eine Vorderrad-Bremsservovorrichtung (70), die dazu ausgebildet ist, einen Bremshydraulikdruck in dem Vorderrad-Radzylinder (33) auf der Basis des durch die Vorderrad-Hauptzylinder-Hydraulikdruck-Erfassungseinheit (71) erfassten Bremshydraulikdrucks zu verstärken, oder eine Hinterrad-Bremsservovorrichtung (80), die dazu ausgebildet ist, einen Bremshydraulikdruck in dem Hinterrad-Radzylinder (43) auf der Basis des durch die Hinterrad-Hauptzylinder-Hydraulikdruck-Erfassungseinheit (81) erfassten Bremshydraulikdrucks zu verstärken,
wobei der Vorderrad-Radzylinder (33), wenn der Fahrer das Vorderrad-Bremsbedienelement (51) bedient hat, während das Fahrzeug (1) in einem Aus-Zustand ist, in dem der Hauptschalter aus ist und das Grätschfahrzeug (1) stillsteht oder in dem der Hauptschalter aus ist und der Fahrer das Grätschfahrzeug (1) bewegt, durch den Bremshydraulikdruck betätigt wird, der durch den Vorderrad-Hauptzylinder (52) erzeugt wird, ohne einen Bremshydraulikdruck zu empfangen, der aus einer Verstärkung durch die Vorderrad-Bremsservovorrichtung (70) resultiert, und der Vorderrad-Radzylinder (33), wenn der Fahrer das Vorderrad-Bremsbedienelement (51) in zumindest einem Abschnitt eines Zeitraums für einen An-Zustand bedient hat, der nicht der Aus-Zustand ist, durch den Bremshydraulikdruck betätigt wird, der aus der Verstärkung durch die Vorderrad-Bremsservovorrichtung (70) resultiert, oder
der Hinterrad-Radzylinder (43), wenn der Fahrer das Hinterrad-Bremsbedienelement (61) bedient hat, während das Fahrzeug (1) in dem Aus-Zustand ist, in dem der Hauptschalter aus ist und das Grätschfahrzeug (1) stillsteht oder in dem der Hauptschalter aus ist und der Fahrer das Grätschfahrzeug (1) bewegt, durch den Bremshydraulikdruck betätigt wird, der durch den Hinterrad-Hauptzylinder (62) erzeugt wird, ohne einen Bremshydraulikdruck zu empfangen, der aus einer Verstärkung durch die Hinterrad-Bremsservovorrichtung (80) resultiert, und der Hinterrad-Radzylinder (43), wenn der Fahrer das Hinterrad-Bremsbedienelement (61) in zumindest einem Abschnitt des Zeitraums für den An-Zustand, der nicht der Aus-Zustand ist, bedient hat, durch den Bremshydraulikdruck betätigt wird, der aus der Verstärkung durch die Hinterrad-Bremsservovorrichtung (80) resultiert.

2. Das Grätschfahrzeug (1) gemäß Anspruch 1, bei dem die Vorderrad-Bremsservovorrichtung (70) keinen Akkumulator umfasst und einen Vorderrad-Elektromotor umfasst, der dazu ausgebildet ist, den Bremshydraulikdruck in dem Vorderrad-Radzylinder (33) zu erzeugen, oder
die Hinterrad-Bremsservovorrichtung (80) keinen Akkumulator umfasst und einen Hinterrad-Elektromotor umfasst, der dazu ausgebildet ist, den Bremshydraulikdruck in dem Hinterrad-Radzylinder (43) zu erzeugen.

3. Das Grätschfahrzeug (1) gemäß Anspruch 1 oder 2, bei dem die Vorderrad-Bremsservovorrichtung (70) folgende Merkmale umfasst: ein elektrisches Vorderradventil (74), das an dem Vorderrad-Bremsfluidkanal (53) vorgesehen ist, zum Schalten des Vorderrad-Bremsfluidkanals (53) zwischen einem getrennten Zustand und einem verbundenen Zustand, wobei das elektrische Vorderradventil (74) dazu ausgebildet ist, zu bewirken, dass der Vorderrad-Bremsfluidkanal (53) in dem verbundenen Zustand ist, wenn das Fahrzeug (1) in dem Aus-Zustand ist, oder
die Hinterrad-Bremsservovorrichtung (80) ein elektrisches Hinterradventil (84), das an dem Hinterrad-Bremsfluidkanal (63) vorgesehen ist, zum Schalten des Hinterrad-Bremsfluidkanals (63) zwischen einem getrennten Zustand und einem verbundenen Zustand umfasst, wobei das elektrische Hinterradventil (84) dazu ausgebildet ist, zu bewirken, dass der Hinterrad-Bremsfluidkanal (63) in dem verbundenen Zustand ist, wenn das Fahrzeug (1) in dem Aus-Zustand ist.

4. Das Grätschfahrzeug (1) gemäß einem der Ansprüche 1 bis 3, bei dem die Vorderrad-Bremsservovorrichtung (70) einen elektrischen Vorderradverstärker (72), der dazu ausgebildet ist, den Bremshydraulikdruck in dem Vorderrad-Radzylinder (33) zu verstärken, und eine Vorderradverstärker-Steuereinheit (73) umfasst, die dazu ausgebildet ist, den elektrischen Vorderradverstärker (72) auf der Basis eines Signals von der Vorderrad-Hauptzylinder-Hydraulikdruck-Erfassungseinheit (71) anzutreiben, wobei die Vorderradverstärker-Steuereinheit (73) dazu ausgebildet ist, den elektrischen Vorderradverstärker (72) anzutreiben, so dass ein Bremshydraulikdruck, der aus einer Verstärkung durch den elektrischen Vorderradverstärker (72) resultiert, variabel ist, so dass der Bremshydraulikdruck in dem Vorderrad-Radzylinder (33) variabel ist, oder
die Hinterrad-Bremsservovorrichtung (80) einen elektrischen Hinterradverstärker (82), der dazu ausgebildet ist, den Bremshydraulikdruck in dem Hinterrad-Radzylinder (43) zu verstärken, und eine Hinterradverstärkereinheit (83) umfasst, die dazu ausgebildet ist, den elektrischen Hinterradverstärker (82) auf der Basis eines Signals von der Hinterrad-Hauptzylinder-Hydraulikdruck-Erfassungseinheit (81) anzutreiben, wobei die Hinterradverstärker-Steuereinheit (83) dazu ausgebildet ist, den elektrischen Hinterradverstärker (82) anzutreiben, so dass ein Bremshydraulikdruck, der aus einer Verstärkung durch den elektrischen Hinterradverstärker (82) resultiert, variabel ist, so dass der Bremshydraulikdruck in dem Hinterrad-Radzylinder (43) variabel ist.

5. Das Grätschfahrzeug (1) gemäß Anspruch 4, bei dem der elektrische Vorderradverstärker (72) oder der elektrische Hinterradverstärker (82) eine elektrisch angetriebene Zahnradpumpe, eine elektrisch angetriebene Trochoidpumpe, eine elektrisch angetriebene Kolbenpumpe oder ein elektrisch angetriebener Hauptzylinder ist.

6. Das Grätschfahrzeug (1) gemäß einem der Ansprüche 1 bis 5, bei dem der Vorderrad-Radzylinder (33), wenn der Fahrer das Vorderrad-Bremsbedienelement (51) in zumindest einem Abschnitt des Zeitraums für den An-Zustand bedient hat, durch den Bremshydraulikdruck betätigt wird, der aus der Verstärkung durch die Vorderrad-Bremsservovorrichtung (70) resultiert, während der Vorderrad-Bremsfluidkanal (53) in dem verbundenen Zustand ist, oder
der Hinterrad-Radzylinder (43), wenn der Fahrer das Hinterrad-Bremsbedienelement (61) in zumindest einem Abschnitt des Zeitraums für den An-Zustand bedient hat, durch den Bremshydraulikdruck betätigt wird, der aus der Verstärkung durch die Hinterrad-Bremsservovorrichtung (80) resultiert, während der Hinterrad-Bremsfluidkanal (63) in dem verbundenen Zustand ist.

7. Das Grätschfahrzeug (1) gemäß einem der Ansprüche 1 bis 5, bei dem der Vorderrad-Radzylinder (33), wenn der Fahrer das Vorderrad-Bremsbedienelement (51) in zumindest einem Abschnitt des Zeitraums für den An-Zustand bedient hat, durch den Bremshydraulikdruck betätigt wird, der aus der Verstärkung durch die Vorderrad-Bremsservovorrichtung (70) resultiert, während der Vorderrad-Bremsfluidkanal (53) in dem getrennten Zustand ist, oder
der Hinterrad-Radzylinder (43), wenn der Fahrer das Hinterrad-Bremsbedienelement (61) in zumindest einem Abschnitt des Zeitraums für den An-Zustand bedient hat, durch den Bremshydraulikdruck betätigt wird, der aus der Verstärkung durch die Hinterrad-Bremsservovorrichtung (80) resultiert, während der Hinterrad-Bremsfluidkanal (63) in dem getrennten Zustand ist.

8. Das Grätschfahrzeug (1) gemäß einem der Ansprüche 1 bis 7, bei dem der Vorderrad-Radzylinder (33), wenn der Fahrer das Vorderrad-Bremsbedienelement (51) in zumindest einem Abschnitt des Zeitraums für den An-Zustand bedient hat, durch den Bremshydraulikdruck betätigt wird, der aus einem Verstärken, mit einem vorbestimmten Verhältnis, des Bremshydraulikdrucks resultiert, der durch den Vorderrad-Hauptzylinder (52) erzeugt wird, oder
der Hinterrad-Radzylinder (43), wenn der Fahrer das Hinterrad-Bremsbedienelement (61) in zumindest einem Abschnitt des Zeitraums für den An-Zustand bedient hat, durch den Bremshydraulikdruck betätigt wird, der aus einem Verstärken, mit einem vorbestimmten Verhältnis, des Bremshydraulikdrucks resultiert, der durch den Hinterrad-Hauptzylinder (62) erzeugt wird.

9. Das Grätschfahrzeug (1) gemäß einem der Ansprüche 1 bis 7, wobei das Grätschfahrzeug (1) eine Fahrtbedingungserfassungseinheit (22, 25, 26, 27) aufweist, die dazu ausgebildet ist, eine Bedingung des Fahrzeugs (1) in Bezug auf eine Fahrt des Grätschfahrzeugs (1) zu erfassen,
wobei der Vorderrad-Radzylinder (33), wenn der Fahrer das Vorderrad-Bremsbedienelement (51) in zumindest einem Abschnitt des Zeitraums für den An-Zustand bedient hat, durch einen Bremshydraulikdruck betätigt wird, der aus einem Verstärken, mit einem Verhältnis auf der Basis der Fahrzeugbedingung, die durch die Fahrtbedingungserfassungseinheit (22, 25, 26, 27) erfasst wird, des Bremshydraulikdrucks resultiert, der durch den Vorderrad-Hauptzylinder (52) erzeugt wird, oder
der Hinterrad-Radzylinder (43), wenn der Fahrer das Hinterrad-Bremsbedienelement (61) in zumindest einem Abschnitt des Zeitraums für den An-Zustand bedient hat, durch einen Bremshydraulikdruck betätigt wird, der aus einem Verstärken, mit einem Verhältnis auf der Basis der Fahrzeugbedingung, die durch die Fahrtbedingungserfassungseinheit (22, 25, 26, 27) erfasst wird, des Bremshydraulikdrucks resultiert, der durch den Hinterrad-Hauptzylinder (62) erzeugt wird.

10. Das Grätschfahrzeug (1) gemäß einem der Ansprüche 1 bis 9, bei dem das Vorderrad-Bremsbedienelement (51) ein Bremshebel ist, der an dem Stangengriff (20) gelagert ist.

11. Das Grätschfahrzeug (1) gemäß einem der Ansprüche 1 bis 10, bei dem das Hinterrad-Bremsbedienelement (61) ein Bremspedal ist, das an dem Fahrzeugkörper vorgesehen ist.

12. Das Grätschfahrzeug (1) gemäß einem der Ansprüche 1 bis 11, bei dem die Vorderrad-Bremsservovorrichtung (70) oder die Hinterrad-Bremsservovorrichtung (80) an dem Fahrzeugkörper gelagert ist.

## Revendications

1. Véhicule du type à selle (1), comprenant:
une carrosserie de véhicule;
une roue avant (3) et une roue arrière (4) supportées sur la carrosserie de véhicule;
un frein de roue avant (30) prévu sur la roue avant (3) et comportant un cylindre de roue de la roue avant (33) destiné à générer une force de freinage pour la roue avant (3);
un élément d'actionnement de freinage de roue avant (51) pouvant être actionné par un motocycliste;
un cylindre principal de roue avant (52) pouvant être actionné par un actionnement de l'élément d'actionnement de freinage de roue avant (51);
un canal à fluide de frein de roue avant (53) connectant le cylindre principal de roue avant (52) au cylindre de roue de la roue avant (33);
un frein de roue arrière (40) prévu sur la roue arrière (4) et comportant un cylindre de roue de la roue arrière (43) destiné à générer une force de freinage pour la roue arrière (4);
un élément d'actionnement de freinage de roue arrière (61) pouvant être actionné par le motocycliste;
un cylindre principal de roue arrière (62) pouvant être actionné par un actionnement de l'élément d'actionnement de freinage de roue arrière (61);
un canal à fluide de frein de roue arrière (63) connectant le cylindre principal de roue arrière (62) au cylindre de roue de la roue arrière (43);
une poignée barre (20), au moins l'un parmi l'élément d'actionnement de freinage de roue avant (51) et l'élément d'actionnement de freinage de roue arrière (61) étant supporté sur la poignée barre (20), la poignée barre (20) étant configurée de manière à être à même de changer la direction de la roue avant (3);
un dispositif de commande configuré pour commander le véhicule de type à selle (1); et
un interrupteur principal configuré pour mettre en marche le dispositif de commande,
le canal à fluide de frein de roue avant (53) étant indépendant du canal à fluide de frein de roue arrière (63),
le véhicule de type à selle (1) comprenant par ailleurs:
une unité de détection de pression hydraulique de cylindre principal de roue avant (71) configurée pour détecter une pression hydraulique de frein générée dans le cylindre principal de roue avant (52), ou une unité de détection de pression hydraulique de cylindre principal de roue arrière (81) configurée pour détecter une pression hydraulique de frein générée dans le cylindre principal de roue arrière (62),
le véhicule de type à selle (1) comprenant par ailleurs:
un dispositif d'asservissement de frein de roue avant (70) configuré pour augmenter une pression hydraulique de frein dans le cylindre de roue de la roue avant (33) sur base de la pression hydraulique de frein détectée par l'unité de détection de pression hydraulique de cylindre principal de roue avant (71), ou un dispositif d'asservissement de frein de roue arrière (80) configuré pour augmenter une pression hydraulique de frein dans le cylindre de roue de la roue arrière (43) sur base de la pression hydraulique de frein détectée par l'unité de détection de pression hydraulique de cylindre principal de roue arrière (81),
dans lequel, lorsque le motocycliste a actionné l'élément d'actionnement de freinage de roue avant (51) tandis que le véhicule (1) est à l'état désactivé dans lequel l'interrupteur principal est désactivé et le véhicule de type à selle (1) est stationnaire, ou dans lequel l'interrupteur principal est désactivé et le motocycliste déplace le véhicule de type à selle (1), le cylindre de roue de la roue avant (33) est actionné par la pression hydraulique de frein générée par le cylindre principal de roue avant (52) sans recevoir de pression hydraulique de frein résultant d'une stimulation par le dispositif d'asservissement de frein de roue avant (70) et, lorsque le motocycliste a actionné l'élément d'actionnement de freinage de roue avant (51) pendant au moins une partie d'une période pour un état activé autre que l'état désactivé, le cylindre de roue de la roue avant (33) est actionné par la pression hydraulique de frein résultant de la stimulation par le dispositif d'asservissement de frein de roue avant (70), ou
lorsque le motocycliste a actionné l'élément d'actionnement de freinage de roue arrière (61) tandis que le véhicule (1) est à l'état désactivé dans lequel l'interrupteur principal désactivé et le véhicule de type à selle (1) est stationnaire, ou dans lequel l'interrupteur principal est désactivé et le motocycliste déplace le véhicule de type à selle (1), le cylindre de roue de la roue arrière (43) est actionné par la pression hydraulique de frein générée par le cylindre principal de roue arrière (62) sans recevoir de pression hydraulique de frein résultant d'une stimulation du dispositif d'asservissement de frein de roue arrière (80) et, lorsque le motocycliste a actionné l'élément d'actionnement de freinage de roue arrière (61) pendant au moins une partie de la période de l'état activé autre que l'état désactivé, le cylindre de roue de la roue arrière (43) est actionné par la pression hydraulique de frein résultant de la stimulation par le dispositif d'asservissement de frein de roue arrière (80).

2. Véhicule de type à selle (1) selon la revendication 1, dans lequel le dispositif d'asservissement de frein de roue avant (70) ne comporte pas d'accumulateur et comporte un moteur électrique de roue avant configuré pour générer la pression hydraulique de frein dans le cylindre de roue de la roue avant (33), ou
le dispositif d'asservissement de frein de roue arrière (80) ne comporte pas d'accumulateur et comporte un moteur électrique de roue arrière configuré pour générer la pression hydraulique de frein dans le cylindre de roue de la roue arrière (43).

3. Véhicule de type à selle (1) selon la revendication 1 ou 2, dans lequel le dispositif d'asservissement de frein de roue avant (70) comporte une soupape électrique de roue avant (74) prévue sur le canal à fluide de frein de roue avant (53) destinée à commuter le canal à fluide de frein de roue avant (53) entre un état déconnecté et un état communiqué, la soupape électrique de roue avant (74) étant configurée pour amener le canal à fluide de frein de roue avant (53) à l'état communiqué lorsque le véhicule (1) est à l'état désactivé, ou
le dispositif d'asservissement de frein de roue arrière (80) comporte une soupape électrique de roue arrière (84) prévue sur le canal à fluide de frein de roue arrière (63) destinée à commuter le canal à fluide de frein de roue arrière (63) entre un état déconnecté et un l'état communiqué, la soupape électrique de roue arrière (84) étant configurée pour amener le canal à fluide de frein de roue arrière (63) à l'état communiqué lorsque le véhicule (1) est à l'état désactivé.

4. Véhicule de type à selle (1) selon l'une quelconque des revendications 1 à 3, dans lequel le dispositif d'asservissement de frein de roue avant (70) comporte un dispositif d'assistance électrique de roue avant (72) configuré pour augmenter la pression hydraulique de frein dans le cylindre de roue de la roue avant (33) et une unité de commande de dispositif d'assistance de roue avant (73) configurée pour commander le dispositif d'assistance électrique de roue avant (72) sur base d'un signal provenant de l'unité de détection de pression hydraulique de cylindre principal de roue avant (71), l'unité de commande de dispositif d'assistance de roue avant (73) étant configurée pour entraîner le dispositif d'assistance électrique de roue avant (72) de sorte qu'une pression hydraulique de frein résultant d'une stimulation par le dispositif d'assistance électrique de roue avant (72) soit variable de sorte que la pression hydraulique de frein dans le cylindre de roue de la roue avant (33) soit variable, ou
le dispositif d'asservissement de frein de roue arrière (80) comporte un dispositif d'assistance électrique de roue arrière (82) configuré pour augmenter la pression hydraulique de frein dans le cylindre de roue de la roue arrière (43) et une unité de commande de dispositif d'assistance de roue arrière (83) configurée pour commander le dispositif d'assistance électrique de roue arrière (82) sur base d'un signal provenant de l'unité de détection de pression hydraulique de cylindre principal de roue arrière (81), l'unité de commande de dispositif d'assistance de roue arrière (83) étant configurée pour commander le dispositif d'assistance électrique de roue arrière (82) de sorte qu'une pression hydraulique de frein résultant d'une stimulation par le dispositif d'assistance électrique de roue arrière (82) soit variable de sorte que la pression hydraulique de frein dans le cylindre de roue arrière (43) soit variable.

5. Véhicule de type à selle (1) selon la revendication 4, dans lequel le dispositif d'assistance électrique de roue avant (72) ou le dispositif d'assistance électrique de roue arrière (82) est une pompe à engrenages à commande électrique, une pompe trochoïde à commande électrique, une pompe à piston à commande électrique ou un cylindre principal à commande électrique.

6. Véhicule de type à selle (1) selon l'une quelconque des revendications 1 à 5, dans lequel, lorsque le motocycliste a actionné l'élément d'actionnement de freinage de roue avant (51) pendant au moins une partie de la période de l'état activé, le cylindre de roue de la roue avant (33) est actionné par la pression hydraulique de frein résultant de la stimulation par le dispositif d'asservissement de frein de roue avant (70) tandis que le canal à fluide de frein de roue avant (53) est à l'état communiqué, ou
lorsque le motocycliste a actionné l'élément d'actionnement de freinage de roue arrière (61) pendant au moins une partie de la période de l'état activé, le cylindre de roue de la roue arrière (43) est actionné par la pression hydraulique de freinage résultant de la stimulation par dispositif d'asservissement de frein de roue arrière (80) tandis que le canal à fluide de frein de roue arrière (63) est à l'état communiqué.

7. Véhicule de type à selle (1) selon l'une quelconque des revendications 1 à 5, dans lequel, lorsque le motocycliste a actionné l'élément d'actionnement de freinage de roue avant (51) pendant au moins une partie de la période de l'état activé, le cylindre de roue de la roue avant (33) est actionné par la pression hydraulique de frein résultant de la stimulation par le dispositif d'asservissement de frein de roue avant (70) tandis que le canal à fluide de frein de roue avant (53) est à l'état déconnecté, ou
lorsque le motocycliste a actionné l'élément d'actionnement de freinage de roue arrière (61) pendant au moins une partie de la période de l'état activé, le cylindre de roue de la roue arrière (43) est actionné par la pression hydraulique de frein résultant de la stimulation par dispositif d'asservissement de frein de roue arrière (80) tandis que le canal de liquide de frein de roue arrière (63) est à l'état déconnecté.

8. Véhicule de type à selle (1) selon l'une quelconque des revendications 1 à 7, dans lequel, lorsque le motocycliste a actionné l'élément d'actionnement de freinage de roue avant (51) pendant au moins une partie de la période de l'état activé, le cylindre de roue de la roue avant (33) est actionné par la pression hydraulique de frein résultant de la stimulation, selon un taux prédéterminé, de la pression hydraulique de frein générée par le cylindre principal de roue avant (52), ou
lorsque le motocycliste a actionné l'élément d'actionnement de freinage de roue arrière (61) pendant au moins une partie de la période de l'état activé, le cylindre de roue de la roue arrière (43) est actionné par la pression hydraulique de frein résultant de la stimulation, selon un taux prédéterminé, de la pression hydraulique de frein générée par le cylindre principal de roue arrière (62).

9. Véhicule de type à selle (1) selon l'une quelconque des revendications 1 à 7, dans lequel le véhicule de type à selle (1) comprend une unité de détection de condition de déplacement (22, 25, 26, 27) configurée pour détecter une condition de véhicule (1) relative à un déplacement du véhicule de type à selle (1),
dans lequel, lorsque le motocycliste a actionné l'élément d'actionnement de freinage de roue avant (51) pendant au moins une partie de la période de l'état activé, le cylindre de roue de la roue avant (33) est actionné par une pression hydraulique de frein résultant de la stimulation, selon un taux basé sur la condition du véhicule détectée par l'unité de détection de condition de déplacement (22, 25, 26, 27), de la pression hydraulique de frein générée par le cylindre principal de roue avant (52), ou
lorsque le motocycliste a actionné l'élément d'actionnement de freinage de roue arrière (61) pendant au moins une partie de la période de l'état activé, le cylindre de roue de la roue arrière (43) est actionné par une pression hydraulique de frein résultant de la stimulation, selon un taux basé sur la condition du véhicule détectée par l'unité de détection de condition de déplacement (22, 25, 26, 27), de la pression hydraulique de freinage générée par le cylindre principal de roue arrière (62).

10. Véhicule de type à selle (1) selon l'une quelconque des revendications 1 à 9, dans lequel l'élément d'actionnement de freinage de roue avant (51) est un levier de frein supporté sur la poignée barre (20).

11. Véhicule de type à selle (1) selon l'une quelconque des revendications 1 à 10, dans lequel l'élément d'actionnement de freinage de roue arrière (61) est une pédale de frein prévue sur la carrosserie de véhicule.

12. Véhicule de type à selle (1) selon l'une quelconque des revendications 1 à 11, dans lequel le dispositif d'asservissement de frein de roue avant (70) ou le dispositif d'asservissement de frein de roue arrière (80) est supporté sur la carrosserie de véhicule.
